(19) **Europäisches Patentamt**
**European Patent Office**
**Office européen des brevets**

(11) **EP 1 337 919 B1**

(12) **FASCICULE DE BREVET EUROPEEN**

(45) Date de publication et mention
de la délivrance du brevet:
**11.04.2007 Bulletin 2007/15**

(51) Int Cl.:
**G06F 9/48** (2006.01)

(21) Numéro de dépôt: **01993873.7**

(22) Date de dépôt: **13.11.2001**

(86) Numéro de dépôt international:
**PCT/FR2001/003532**

(87) Numéro de publication internationale:
**WO 2002/039277 (16.05.2002 Gazette 2002/20)**

(54) **PROCEDE DE SECURISATION RENDANT DETERMINISTE L'EXECUTION EN TEMPS REEL D'APPLICATIONS MULTITACHES DU TYPE CONTROLE-COMMANDE AVEC CONFINEMENT D'ERREUR**

SICHERHEITSVERFAHREN MIT DETERMINISTISCHER ECHTZEIT-AUSFÜHRUNG VON MULTITASK-ANWENDUNGEN DES STEUER- UND BEFEHLSTYPS MIT FEHLEREINGRENZUNG

SECURITY METHOD MAKING DETERMINISTIC REAL TIME EXECUTION OF MULTITASK APPLICATIONS OF CONTROL AND COMMAND TYPE WITH ERROR CONFINEMENT

(84) Etats contractants désignés:
**AT BE CH CY DE DK ES FI FR GB GR IE IT LI LU MC NL PT SE TR**

(30) Priorité: **13.11.2000 FR 0014555**

(43) Date de publication de la demande:
**27.08.2003 Bulletin 2003/35**

(73) Titulaires:
• **COMMISSARIAT A L'ENERGIE ATOMIQUE**
**75015 Paris (FR)**
• **Areva NP**
**92400 Courbevoie (FR)**

(72) Inventeurs:
• **DAVID, Vincent**
**F-78000 VERSAILLES (FR)**
• **DELCOIGNE, Jean**
**F-78310 MAUREPAS (FR)**

(74) Mandataire: **Thévenet, Jean-Bruno et al**
**Cabinet Beau de Loménie**
**158, rue de l'Université**
**75007 Paris (FR)**

(56) Documents cités:
**FR-A- 2 771 828**

• DAVID V ET AL: "Safety properties ensured by the OASIS model for safety critical real-time systems" COMPUTER SAFETY, RELIABILITY AND SECURITY. 17TH INTERNATIONAL CONFERENCE, SAFECOMP'98. PROCEEDINGS, PROCEEDINGS OF 17TH INTERNATIONAL CONFERENCE ON COMPUTER SAFETY, RELIABILITY AND SECURITY, HEIDELBERG, GERMANY, 5 - 7 octobre 1998, pages 45-59, XP002176733 Berlin, Germany, Springer-Verlag, Germany ISBN: 3-540-65110-1

• AUSSAGUES C ET AL: "Vérification de propriétés de sûreté dans le modèle OASIS pour les applications temps réel critiques" RTS '97 SALON DES SOLUTIONS POUR LES SYSTEMES TEMPS REEL ET LES APPLICATIONS ENFOUIES (RTS '97: REAL TIME SYSTEMS AND EMBEDDED APPLICATIONS), 1997, pages 145-164, XP001025562 Toulouse, France, Teknea, France ISBN: 2-87717-059-4

• AUSSAGUES C ET AL: "Guaranteeing timeliness in safety critical real-time systems" DISTRIBUTED COMPUTER CONTROL SYSTEMS 1998 (DCCS'98) PROCEEDINGS VOLUME FROM THE 15TH IFAC WORKSHOP, PROCEEDINGS OF THE 15TH IFAC WORKSHOP ON DISTRIBUTED COMPUTER CONTROL SYSTEMS 1998, COMO, ITALY, 9 - 11 septembre 1998, pages 83-89, XP002176734 Kidlington, UK, Elsevier Science, UK ISBN: 0-08-043242-5

- **ASPELUND J ET AL: "A fault tolerant multimicroprocessor operating system modeled with locality Petri nets" IMPLEMENTING FUNCTIONS: MICROPROCESSORS AND FIRMWARE. SEVENTH EUROMICRO SYMPOSIUM ON MICROPROCESSING AND MICROPROGRAMMING, PARIS, FRANCE, 8 - 10 septembre 1981, pages 63-70, XP000745703 Amsterdam, Netherlands, North-Holland, Netherlands ISBN: 0-444-86282-X**

**Description**

La présente invention a pour objet un procédé de sécurisation rendant déterministe l'exécution en temps réel d'applications multitâches du type contrôle-commande dans un système de contrôle comprenant au moins une première horloge qui émet un signal d'interruption lorsqu'une quantité de temps réglable s'est écoulée, une unité centrale de calcul avec au moins un processeur pouvant recevoir au moins ledit signal d'interruption d'horloge, une mémoire principale et un ensemble de contrôleurs de périphérique pour la gestion d'entrées-sorties du système de contrôle.

Dans un système de gestion multitâche de divers traitements (entrées-sorties, calculs,...) ayant des échelles de temps différentes, aptes à échanger des données, avec synchronisation et coordination en temps réel de tous les traitements, il est souhaitable de pouvoir exécuter des traitements en temps réel de façon déterministe, c'est-à-dire avec une unicité et une invariance du comportement global de toutes les tâches qui interagissent entre elles et avec l'environnement. Il est également souhaitable que l'exécution des traitements en temps réel soit sécurisée, c'est-à-dire inclue la détection et le confinement d'anomalies de manière à assurer l'indépendance des diverses tâches par rapport aux défaillances, tout en demeurant le plus déterministe possible en présence d'anomalies de fonctionnement.

On connaît déjà de nombreux systèmes de gestion multitâches. Toutefois, ces systèmes de gestion sont la plupart du temps asynchrones et donc non déterministes. De plus, de tels systèmes présentent une conception qui n'empêche pas la propagation de certains modes de défaillance.

De façon plus particulière, on connaît par le document FR-A-2 771 828, un procédé de sécurisation d'un calculateur multitâche équipé d'un système de détection de défaillance par partitionnement temporel ou spatial qui repère à chaque instant la tâche dont l'exécution est licite.

Selon ce document, qui concerne un système du type à ordonnancement cyclique, le partitionnement est utilisé pour limiter la propagation des défaillances, mais il n'y a alors plus de communications entre les partitions, c'est-à-dire qu'il n'y a plus de gestion multitâche au niveau global. De plus, il existe toujours une possibilité de propagation des défaillances au sein d'une partition, ce qui ne permet pas d'avoir une sûreté maximale.

Le document FR-A-2 771 828 montre ainsi que l'obtention d'un déterminisme paraît contradictoire avec une gestion multitâche.

Christophe AUSSAGUES et al., *"Guaranteeing Timeliness In Safety-critical Real-time Systems"* décrit un procédé de modélisation pour garantir l'exécution déterministe en temps réel d'applications multitâches, comprenant les étapes suivantes : définir pour chacune des tâches les enchaînements autorisés se traduisant par un graphe d'états-transitions, définir pour chaque tâche un noeud initial, à partir des graphes d'états-transitions construire un graphe SP représentant toutes les exécutions possibles de l'ensemble des tâches, et analyser le graphe SP pour déterminer si l'exécution déterministe des tâches est garantie.

La présente invention vise à remédier aux inconvénients de l'art antérieur et à permettre de disposer de systèmes de contrôle plus intégrés, plus performants et plus sûrs.

De façon plus particulière, la présente invention vise à permettre une exécution sécurisée multitâche en temps réel et de façon déterministe par un calculateur avec confinement d'erreur et tolérance aux fautes.

L'invention vise ainsi à permettre d'assurer une sécurisation assurant un haut degré de déterminisme de l'exécution en temps réel d'applications multitâches aussi bien pour des tâches cycliques que pour des tâches acycliques, avec des communications explicites (messages datés) et implicites (flots de données datées).

Ces buts sont atteints grâce à un procédé de sécurisation rendant déterministe l'exécution en temps réel d'applications multitâches du type contrôle-commande dans un système de contrôle comprenant :

- au moins une première horloge qui émet un signal d'interruption sh lorsqu'une quantité de temps réglable s'est écoulée,
- une unité centrale de calcul avec au moins un processeur pouvant recevoir au moins ledit signal d'interruption d'horloge sh,
- une mémoire principale, et
- un ensemble de contrôleurs de périphérique pour la gestion d'entrées-sorties du système de contrôle,

procédé caractérisé en ce qu'il comprend les étapes suivantes :

(a) mémoriser, pour chacune des tâches d'une application donnée tous les enchaînements autorisés de ses points de synchronisation temporelle nécessitant un appel à une couche système, ces enchaînements se traduisant par un graphe de contrôle de l'exécution d'appels à la couche système de la tâche considérée, chaque graphe comportant un ensemble de noeuds correspondant chacun à un appel à la couche système du système de contrôle,
(b) mémoriser, pour chaque noeud du graphe de contrôle de chaque tâche, la nature de l'appel à la couche système et ses paramètres d'appel, y compris des paramètres temporels qui permettent les mises à jours de dates d(i) de "début au plus tôt" et de dates f(i) de "fin au plus tard",

(c) mémoriser, pour chaque tâche, un noeud initial dans le graphe associé,

(d) initialiser, pour l'application donnée et préalablement au démarrage de l'exécution temps réel selon un mode de fonctionnement cadencé par le temps, pour chaque tâche, le noeud initial et l'instant initial représentant l'état initial de la tâche considérée,

(e) initialiser, pour l'application donnée et préalablement au démarrage de l'exécution temps réel selon un mode de fonctionnement cadencé par le temps l'ordre de départ de chacune des tâches en effectuant un pré-ordonnancement des listes des tâches au niveau d'un micro-noyau atomique,

(f) armer la première horloge pour émettre le signal d'interruption d'horloge <u>sh</u> constituant un appel au micro-noyau, au premier instant de l'application pour le démarrage de l'exécution de cette application en mode cadencé par le temps,

(g) en cours de fonctionnement normal après armement de la première horloge, provoquer le désarmement de la première horloge par le micro-noyau à chaque appel au micro-noyau ; lors d'un appel au micro-noyau par la couche système ou par le traitement du signal d'interruption <u>sh</u>, faire passer le micro-noyau à l'étape de mise à jour des listes des tâches de façon ordonnée selon les caractéristiques temporelles des tâches, à savoir leur date d(i) de début au plus tôt et leur date f(i) de fin au plus tard ; faire calculer au micro-noyau, après la mise à jour des listes, le plus petit instant futur où une tâche devra être réveillée et faire armer la première horloge par le micro-noyau, à partir de ce plus petit instant futur, pour réveiller ladite tâche et sortir du micro-noyau,

(h) lors de l'exécution d'une tâche, effectuer un appel à la couche système seulement lorsqu'un noeud du graphe de contrôle de ladite tâche est atteint, en passant comme argument le numéro du noeud ; procéder à un contrôle, lors de l'entrée dans la couche système, pour vérifier si, selon le graphe de contrôle de la tâche en cours d'exécution, l'enchaînement à partir du noeud correspondant au précédent appel à la couche système est autorisé, afin de lancer au niveau de la couche système le traitement d'une anomalie si ledit enchaînement n'est pas autorisé et de poursuivre l'exécution si ledit enchaînement est autorisé, effectuer la mise à jour des paramètres temporels de la tâche en cours d'exécution comprenant la date d(i) de début au plus tôt et la date f(i) de fin au plus tard à l'aide d'appels au micro-noyau par la couche système et poursuivre normalement l'exécution de la tâche en cours jusqu'à ce que celle-ci atteigne à nouveau un noeud de son graphe de contrôle.

De façon plus particulière, le procédé de sécurisation selon l'invention est appliqué à un système de contrôle comprenant en outre une unité de protection mémoire pour le contrôle des droits d'accès d'adressage, laquelle unité de protection mémoire, à partir d'une adresse demandée <u>ad</u> fournie par l'unité centrale de calcul et de droits (C) d'accès des contextes d'exécution du processeur sur l'espace mémoire adressable, produit de manière exclusive une adresse validée <u>av</u> qui permet l'accès ou bien émet en direction de l'unité centrale de calcul un signal d'exception <u>se</u> d'adressage non autorisé, et le procédé de sécurisation comprend en outre les étapes suivantes :

(i) lors d'une phase de préparation, mémoriser pour une application donnée, les droits d'accès à chacun des segments mémoire pour le micro-noyau et pour chaque tâche de l'application et son prolongement dans la couche système de manière à constituer des premier et deuxième contextes d'exécution selon que les instructions se trouvent dans le code propre à l'application constituant la tâche ou que ces instructions se trouvent dans le code générique de la couche système constituant le prolongement de la tâche dans la couche système,

(j) pour une application donnée et préalablement au démarrage de l'exécution temps réel selon un mode de fonctionnement cadencé par le temps, initialiser le contexte du micro-noyau et les premier et deuxième contextes d'exécution pour chaque tâche et pour son prolongement dans la couche système,

(k) lors de l'exécution d'une tâche, effectuer un appel à la couche système à l'aide d'une instruction de passage dans un mode d'exécution privilégié qui permet de passer du contexte d'exécution de la tâche au contexte d'exécution de son prolongement dans la couche système, et après avoir contrôlé que l'enchaînement à partir du noeud correspondant au précédent appel système est autorisé, et après mise à jour des paramètres temporels de la tâche à l'aide d'appels au micro-noyau par la couche système, retourner dans le code de la tâche à l'aide d'une instruction de retour dans le mode non-privilégié qui permet de passer du contexte d'exécution du prolongement dans la couche système au contexte d'exécution de la tâche.

De façon préférentielle, les contextes d'exécution de chaque tâche de l'application sont deux à deux disjoints.

Selon une caractéristique particulière du procédé selon l'invention, les prolongements des contextes d'exécution des tâches de l'application dans la couche système ne sont pas accessibles en écriture aux contextes d'exécution des tâches avec le code de l'application.

Le codage du graphe de contrôle d'une tâche interdit toute défaillance de cause commune entre le mécanisme de contrôle d'exécution d'une tâche quelconque de l'application et l'exécution de cette tâche elle-même.

Le procédé selon l'invention peut encore comprendre les étapes suivantes :

(l) lors d'une phase de préparation, mémoriser pour une application donnée, pour tous les enchaînements autorisés dans chaque tâche, un quota de temps constituant un majorant du temps d'exécution maximum nécessaire pour passer d'un noeud à l'autre dans le graphe de contrôle de la tâche, chacun de ces quotas de temps englobant le temps passé dans l'exécution des instructions propres de la tâche, mais aussi le temps passé dans l'exécution du code générique de la couche système en prolongement de la tâche,

(m) en cours de fonctionnement normal après armement de la première horloge, lors d'un appel au micro-noyau déclenché par le signal sh d'interruption sur le temps et provoquant le désarmement de la première horloge, procéder à un contrôle pour vérifier si le signal sh d'interruption sur le temps déclenchant l'appel au micro-noyau est lié à une tentative de violation d'un quota de temps, et si c'est le cas faire lancer par le micro-noyau le traitement de l'anomalie tandis que si le signal sh d'interruption sur le temps n'est pas lié à une tentative de violation d'un quota de temps, faire passer le micro-noyau à l'étape de mise à jour des listes de tâches et, après cette mise à jour des listes des tâches, faire calculer au micro-noyau d'une part le plus petit instant futur où une tâche devra être réveillée et d'autre part l'instant futur à partir duquel le quota de temps imparti à la tâche en exécution à la sortie du micro-noyau, déterminée lors de la mise à jour des listes, sera épuisé, et faire armer la première horloge par le micro-noyau au plus petit de ces instants futurs pour, selon le cas, soit réveiller la tâche, soit détecter une tentative de violation de quota de temps révélant une anomalie de fonctionnement, et sortir du micro-noyau après armement de la première horloge.

Dans le cas où une deuxième horloge est mise en oeuvre dans le système de contrôle, selon une caractéristique particulière de l'invention, on fait accéder le micro-noyau à cette deuxième horloge pour contrôler, par comparaison des signaux de temps, l'écoulement du temps cadencé par la première horloge.

Le procédé de sécurisation selon l'invention, adapté pour rendre déterministe l'exécution en temps réel d'applications multitâches communicantes de type contrôle-commande, peut comprendre en outre les étapes suivantes :

(n) lors d'une phase de préparation, mémoriser pour chacune des tâches d'une application donnée tous les enchaînements autorisés de ses points de synchronisation temporelle et de communication avec les autres tâches de l'application nécessitant un appel à la couche système, ces enchaînements autorisés se traduisant par un graphe de contrôle de l'exécution d'appels à la couche système de la tâche considérée, chaque graphe comportant un ensemble de noeuds correspondant chacun à un appel à la couche système,

(o) mémoriser chaque zone tampon nécessaire à un échange de données entre tâches, en indiquant sa taille, la taille des éléments qu'elle contient, son emplacement ou adresse de base, ainsi que les relations entre les zones tampons permettant de valider les transferts d'informations nécessaires aux communications,

(p) mémoriser pour chaque zone tampon les valeurs initiales de ses éléments,

(q) initialiser, pour l'application donnée et préalablement au démarrage de l'exécution temps réel selon un mode de fonctionnement cadencé par le temps les valeurs des éléments de la zone tampon avec les valeurs précédemment mises en mémoire,

(r) lors de l'exécution d'une tâche, lors d'un appel à la couche système lorsqu'un noeud du graphe de contrôle de la tâche est atteint et après vérification que, selon le graphe de contrôle de la tâche en cours d'exécution, l'enchaînement à partir du noeud correspondant au précédent appel à la couche système est autorisé, effectuer les mises à jour successives des zones tampons en fonction de la nature de l'appel précédemment mémorisé par les mises à jour incrémentales et nécessaires des paramètres temporels de la tâche en cours d'exécution comprenant la date d(i) de début au plus tôt et la date f(i) de fin au plus tard.

Selon une caractéristique particulière de l'invention, au niveau de la couche système on autorise le partage des seule zones tampons par les prolongements des contextes d'exécution des tâches d'une application, une zone tampon donnée pour les communications dynamiques correspondant à l'envoi de messages ne pouvant être partagée que par deux prolongements de contextes d'exécution d'une tâche, tandis qu'une zone tampon donnée pour les communications statiques correspondant à un flot de données datées peut être partagée par plus de deux prolongements de contextes d'exécution d'une tâche mais ne peut toujours être modifiée que par la tâche propriétaire dans le prolongement de son contexte dans la couche système.

Le procédé de sécurisation selon l'invention est applicable à des applications de contrôle-commande à haut degré de criticité en ce qui concerne la sûreté.

En particulier, le procédé selon l'invention peut être appliqué à un système de contrôle-commande d'un niveau de classe de sûreté 1 E pour un réacteur nucléaire.

D'autres caractéristiques et avantages de l'invention ressortiront de la description suivante de modes particuliers de réalisation, donnés à titre d'exemples en référence aux dessins annexés, sur lesquels :

- la Figure 1 est une représentation simplifiée de l'architecture d'un système de contrôle auquel est applicable le procédé de sécurisation de l'invention,

- la Figure 2 est un schéma montrant la répartition en profondeur du code par rapport à une couche système et à un micro-noyau, avec le procédé conforme à l'invention,
- la Figure 3 est un organigramme correspondant au traitement d'un exemple de tâche temps réel selon le procédé de sécurisation conforme à l'invention,
- la Figure 4 est un graphe de contrôle correspondant à l'organigramme de la Figure 3,
- la Figure 5 est un exemple de chronogramme et de valeurs temporelles associées lors du traitement de l'exemple de tâche temps réel des Figures 3 et 4 selon le procédé de sécurisation conforme à l'invention,
- la Figure 6 est une table des noeuds du graphe de contrôle de la Figure 4, comportant la description des opérations à effectuer sur les dates de début au plus tôt $d(i)$ et les dates de fin au plus tard $f(i)$,
- la Figure 7 est un organigramme correspondant au traitement d'un exemple de première tâche temps réel destinée à communiquer avec une deuxième tâche, selon le procédé de sécurisation conforme à l'invention,
- la Figure 8 est un graphe de contrôle correspondant à l'organigramme de la Figure 7,
- la Figure 9 est un organigramme correspondant au traitement d'un exemple de deuxième tâche temps réel destinée à communiquer avec la première tâche temps réel illustrée par l'organigramme de la Figure 7,
- la Figure 10 est un graphe de contrôle correspondant à l'organigramme de la Figure 9,
- la Figure 11 est un exemple de chronogramme et de valeurs temporelles associées lors du traitement de l'exemple de tâches communicantes temps réel des Figures 7 à 10, selon le procédé de sécurisation conforme à l'invention,
- les Figures 12 et 13 sont des tables de noeuds des graphes de contrôle des Figures 8 et 10, comportant les descriptions des opérations à effectuer sur les dates de début au plus tôt $d(i)$ et les dates de fin au plus tard $f(i)$ et sur les messages, et
- la Figure 14 est une table détaillée faisant apparaître pour le processeur les droits d'accès aux segments de la mémoire relatifs à une tâche, à la couche système et au micro-noyau selon un exemple du procédé selon l'invention.

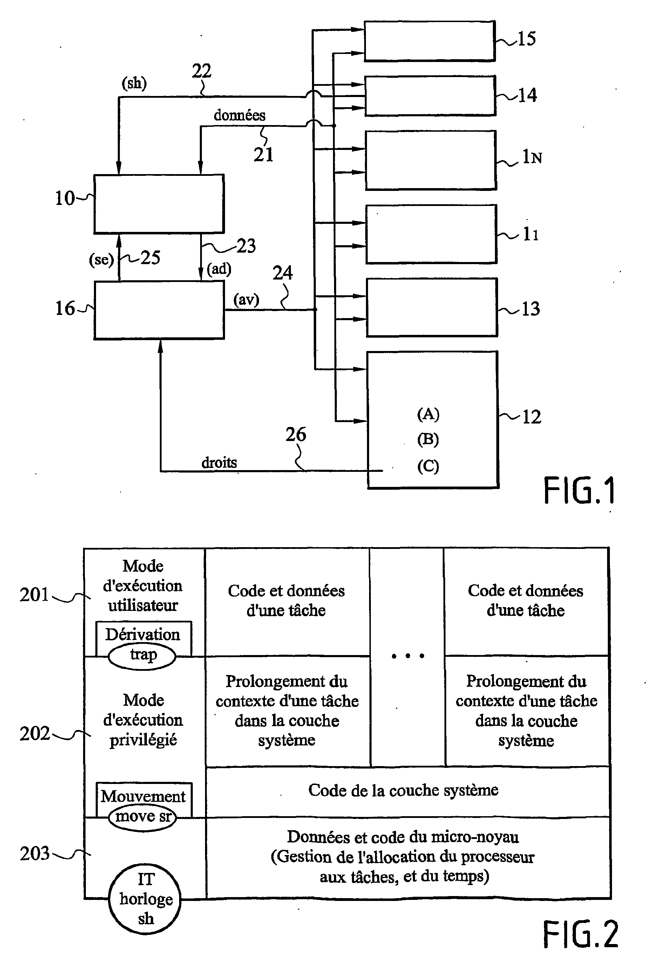

On décrira d'abord en référence à la Figure 1 un exemple d'architecture type simplifiée d'un système de contrôle auquel est applicable le procédé de sécurisation selon l'invention.

Le système de contrôle comprend au moins une première horloge 14 qui transmet par une ligne 22 un signal d'interruption s̲h̲ lorsqu'une quantité de temps programmable s'est écoulée. Une unité centrale de calcul 10 comprend au moins un processeur pouvant recevoir des données par une ligne 21 et le signal d'interruption s̲h̲ par la ligne 22.

L'unité centrale de calcul 10 permet l'envoi, par des lignes 23, 24, de signaux d'adresse à une mémoire principale comprenant une mémoire morte 12 et une mémoire vive 13.

La mémoire morte 12 contient au moins les informations (A) comprenant les programmes de l'application concernée et les informations (B) comprenant les données et les tables constantes de l'application.

La mémoire vive 13 contient les données variables de travail des programmes de l'application.

Des contrôleurs $1_1$ à $1_N$ de périphériques 1 à N permettent d'assurer la gestion en temps réel d'entrées et de sorties du système de contrôle.

Une deuxième horloge 15 peut être mise en oeuvre pour effectuer un contrôle supplémentaire du bon fonctionnement de l'horloge 14.

Le système de contrôle peut en outre comprendre une unité de protection mémoire 16 permettant d'assurer un contrôle des droits d'accès d'adressage.

A partir d'une adresse demandée a̲d̲ fournie par l'unité centrale de calcul 10 à l'unité de protection mémoire 16 par la ligne 23 et de droits (C) d'accès des contextes d'exécution du processeur sur l'espace mémoire adressable, fournis par une ligne 26 reliant la mémoire morte 12 à l'unité de protection mémoire 16, cette unité de protection mémoire 16 produit de manière exclusive sur la ligne 14 reliée aux mémoires 12, 13, aux contrôleurs de périphériques $1_1$ à $1_N$ et aux horloges 14, 15 une adresse validée a̲v̲ qui permet l'accès ou bien émet par une ligne 25 en direction de l'unité centrale de calcul 10 un signal d'exception s̲e̲ d'adressage non autorisé.

L'unité de protection mémoire 16 peut être constituée par un mécanisme présent dans une unité de gestion mémoire standard de type MMU ("Memory Management Unit") laquelle unité de gestion mémoire peut elle-même être incorporée dans le processeur de l'unité centrale de calcul 10.

Le processeur de l'unité centrale de calcul 10, qui peut recevoir au moins un signal d'interruption d'horloge s̲h̲ et un signal d'exception s̲e̲ d'adressage non autorisé, possède un mode d'exécution privilégié dont l'accès est protégé par une instruction du type "appel à la couche système", qui peut être par exemple une instruction de dérivation ("trap").

D'une manière générale, l'invention concerne un système de gestion de type Architecture Cadencée par le Temps ou TTA ("Time Triggered Architecture") multitâche déterministe sécurisé temps réel avec communication explicite (messages datés) et implicites (flots de données datées), le rythme des tâches étant indifféremment cyclique ou acyclique.

De façon plus particulière, selon le procédé de sécurisation conforme à l'invention, on procède à une gestion spécifique des appels à la couche système (par un appel au mode d'exécution privilégié) du système de contrôle, laquelle gestion spécifique permet la détection et le confinement d'erreur avec une garantie de comportement déterministe et prévisible.

Selon l'invention, la gestion des appels à la couche système opère de la façon suivante :

i/ le seul appel à la couche système autorisé depuis une tâche de l'application considérée vers la couche système consiste à faire état du changement de noeud dans le graphe de contrôle de la tâche concernée ;
ii/ la couche système contrôle alors que cet appel est licite par rapport au chemin d'exécution du graphe de contrôle qui est décrit dans les tables constantes de l'application ;
iii/ lorsque l'appel est licite, toutes les opérations à faire sur le noeud considéré, par la couche système, sont prédéterminées par les tables constantes de l'application associée de la couche système.

Un pré-ordonnancement des listes des tâches d'une application considérée est effectué avant l'exécution temps réel au niveau d'un micro-noyau atomique qui assurera ensuite, lorsqu'il sera appelé par la couche système, durant l'exécution temps réel, une mise à jour des listes des tâches de façon ordonnée selon les nouvelles caractéristiques temporelles des tâches, à savoir leur date $d(i)$ de début au plus tôt et leur date $f(i)$ de fin au plus tard calculées par la couche système.

Le procédé de sécurisation de base selon l'invention comprend essentiellement les étapes suivantes :

(a) mémoriser, pour chacune des tâches d'une application donnée tous les enchaînements autorisés de ses points de synchronisation temporelle nécessitant un appel à une couche système, ces enchaînements se traduisant par un graphe de contrôle de l'exécution d'appels à la couche système de la tâche considérée, chaque graphe comportant un ensemble de noeuds correspondant chacun à un appel à la couche système du système de contrôle,
(b) mémoriser, pour chaque noeud du graphe de contrôle de chaque tâche, la nature de l'appel à la couche système et ses paramètres d'appel, y compris des paramètres temporels qui permettent les mises à jours de dates $d(i)$ de "début au plus tôt" et de dates $f(i)$ de "fin au plus tard",
(c) mémoriser, pour chaque tâche, un noeud initial (Noeud 0) dans le graphe associé,
(d) initialiser, pour l'application donnée et préalablement au démarrage de l'exécution temps réel selon un mode de fonctionnement cadencé par le temps, pour chaque tâche, le noeud initial (Noeud 0) et l'instant initial représentant l'état initial de la tâche considérée,
(e) initialiser, pour l'application donnée et préalablement au démarrage de l'exécution temps réel selon un mode de fonctionnement cadencé par le temps l'ordre de départ de chacune des tâches en effectuant un pré-ordonnancement des listes des tâches au niveau d'un micro-noyau atomique,
(f) armer la première horloge 14 pour émettre le signal d'interruption d'horloge <u>sh</u> constituant un appel au micronoyau, au premier instant de l'application pour le démarrage de l'exécution de cette application en mode cadencé par le temps,
(g) en cours de fonctionnement normal après armement de la première horloge 14, provoquer le désarmement de la première horloge 14 par le micro-noyau à chaque appel au micro-noyau ; lors d'un appel au micro-noyau par la couche système ou par le traitement du signal d'interruption <u>sh,</u> faire passer le micro-noyau à l'étape de mise à jour des listes des tâches de façon ordonnée selon les caractéristiques temporelles des tâches, à savoir leur date $d(i)$ de début au plus tôt et leur date $f(i)$ de fin au plus tard ; faire calculer au micro-noyau, après la mise à jour des listes, le plus petit instant futur où une tâche devra être réveillée et faire armer la première horloge 14 par le micro-noyau, à partir de ce plus petit instant futur, pour réveiller ladite tâche et sortir du micro-noyau,
(h) lors de l'exécution d'une tâche, effectuer un appel à la couche système seulement lorsqu'un noeud du graphe de contrôle de ladite tâche est atteint, en passant comme argument le numéro du noeud ; procéder à un contrôle, lors de l'entrée dans la couche système, pour vérifier si, selon le graphe de contrôle de la tâche en cours d'exécution, l'enchaînement à partir du noeud correspondant au précédent appel à la couche système est autorisé, afin de lancer au niveau de la couche système le traitement d'une anomalie si ledit enchaînement n'est pas autorisé et de poursuivre l'exécution si ledit enchaînement est autorisé, effectuer la mise à jour des paramètres temporels de la tâche en cours d'exécution comprenant la date $d(i)$ de début au plus tôt et la date $f(i)$ de fin au plus tard à l'aide d'appels au micro-noyau par la couche système et poursuivre normalement l'exécution de la tâche en cours jusqu'à ce que celle-ci atteigne à nouveau un noeud de son graphe de contrôle.

Comme on l'a indiqué plus haut, le système de contrôle auquel est appliqué le procédé de sécurisation selon l'invention peut comprendre une unité de protection mémoire et des tables pour les droits d'accès sur chacun des segments de chaque contexte, qui sont prédéterminées et peuvent le cas échéant être placées en mémoire morte. Pour chacun des contextes d'exécution, l'initialisation du descripteur de table définissant les droits de ce contexte n'est faite qu'une seule fois lors de la phase d'initialisation de l'ensemble du système et, après cette phase d'initialisation du système, aucun des traitements s'exécutant sur l'unité centrale de calcul n'a, dans son contexte d'exécution, ces tables là.

Le procédé de sécurisation selon l'invention peut alors comprendre en outre les étapes suivantes qui s'intercalent avec les étapes précédemment définies :

(i) lors d'une phase de préparation, mémoriser pour une application donnée, les droits d'accès à chacun des segments mémoire pour le micro-noyau et pour chaque tâche de l'application et son prolongement dans la couche système de manière à constituer des premier et deuxième contextes d'exécution selon que les instructions se trouvent dans le code propre à l'application constituant la tâche ou que ces instructions se trouvent dans le code générique de la couche système constituant le prolongement de la tâche dans la couche système,

(j) pour une application donnée et préalablement au démarrage de l'exécution temps réel selon un mode de fonctionnement cadencé par le temps, initialiser le contexte du micro-noyau et les premier et deuxième contextes d'exécution pour chaque tâche et pour son prolongement dans la couche système,

(k) lors de l'exécution d'une tâche, effectuer un appel à la couche système à l'aide d'une instruction de passage dans un mode d'exécution privilégié qui permet de passer du contexte d'exécution de la tâche au contexte d'exécution de son prolongement dans la couche système, et après avoir contrôlé que l'enchaînement à partir du noeud correspondant au précédent appel système est autorisé, et après mise à jour des paramètres temporels de la tâche à l'aide d'appels au micro-noyau par la couche système, retourner dans le code de la tâche à l'aide d'une instruction de retour dans le mode non-privilégié qui permet de passer du contexte d'exécution du prolongement dans la couche système au contexte d'exécution de la tâche.

Le procédé de sécurisation selon l'invention peut également faire référence à des quotas de temps et peut alors comprendre en outre les étapes suivantes qui s'intercalent avec les étapes précédemment définies du procédé de base ou du procédé de base modifié pour tenir compte de l'existence de modes d'exécution privilégiés permettant un passage à un contexte d'exécution du prolongement d'une tâche dans la couche système :

(l) lors d'une phase de préparation, mémoriser pour une application donnée, pour tous les enchaînements autorisés dans chaque tâche, un quota de temps constituant un majorant du temps d'exécution maximum nécessaire pour passer d'un noeud à l'autre dans le graphe de contrôle de la tâche, chacun de ces quotas de temps englobant le temps passé dans l'exécution des instructions propres de la tâche, mais aussi le temps passé dans l'exécution du code générique de la couche système en prolongement de la tâche,

(m) en cours de fonctionnement normal après armement de la première horloge 14, lors d'un appel au micro-noyau déclenché par le signal sh d'interruption sur le temps et provoquant le désarmement de la première horloge 14, procéder à un contrôle pour vérifier si le signal sh d'interruption sur le temps déclenchant l'appel au micro-noyau est lié à une tentative de violation d'un quota de temps, et si c'est le cas faire lancer par le micro-noyau le traitement de l'anomalie tandis que si le signal sh d'interruption sur le temps n'est pas lié à une tentative de violation d'un quota de temps, faire passer le micro-noyau à l'étape de mise à jour des listes de tâches et, après cette mise à jour des listes des tâches, faire calculer au micro-noyau d'une part le plus petit instant futur où une tâche devra être réveillée et d'autre part l'instant futur à partir duquel le quota de temps imparti à la tâche en exécution à la sortie du micro-noyau, déterminée lors de la mise à jour des listes, sera épuisé, et faire armer la première horloge 14 par le micro-noyau au plus petit de ces instants futurs pour, selon le cas, soit réveiller la tâche, soit détecter une tentative de violation de quota de temps révélant une anomalie de fonctionnement, et sortir du micro-noyau après armement de la première horloge 14.

La procédure de mise à jour des listes de tâches de l'application au niveau du micro-noyau peut encore être explicitée de la façon indiquée ci-dessous qui prend en compte un mode de réalisation préférentiel dans lequel il est fait référence à un quota de temps imparti à la tâche en cours de traitement, mais qui peut s'appliquer aussi à un mode de réalisation de base simplifié si l'on omet la référence à un quota de temps

Pour chaque appel au micro-noyau lors de l'exécution, quel que soit le prolongement du contexte d'exécution de la tâche concernée dans la couche système, deux paramètres comptent pour la mise à jour des listes des tâches : la date $d(i)$ de début au plus tôt et la date $f(i)$ de fin au plus tard. Deux listes de tâches sont gérées : la liste des tâches éligibles, prêtes pour l'exécution, c'est-à-dire dont la date de début au plus tôt $d(i)$ est dans le passé, et la liste des tâches non éligibles, non prêtes pour l'exécution ou en attente de réveil, c'est-à-dire dont la date de début au plus tôt $d(i)$ est dans le futur. La liste des tâches éligibles est ordonnée suivant les dates de fin au plus tard croissantes ; celle des tâches non éligibles est ordonnée suivant les dates $d(i)$ de début au plus tôt croissantes. Toute tâche en attente est assurée de passer dans l'état "prête" lorsque sa date de début au plus tôt est atteinte.

α) Si, lors de l'appel au micro-noyau, la date $d(i)$ de début au plus tôt d'une tâche est dans le futur, la tâche est non éligible et est alors transférée dans la liste ordonnée des tâches non éligibles. Cette date permet de calculer le prochain instant où une tâche devra être réveillée d'après l'ordre des dates de début au plus tôt : la plus petite des dates futures de début au plus tôt donnera l'instant futur où la prochaine tâche concernée sera éligible (pour être réveillée).

β) Si, au contraire, lors de l'appel au micro-noyau, la date d(i) de début au plus tôt de la tâche concernée est dans le passé, la tâche est éligible et est transférée dans la liste ordonnée des tâches éligibles. Le micro-noyau donne alors la main à la tâche éligible qui a la date future de fin au plus tard la plus petite selon la suite ordonnée des dates de fin au plus tard et il calcule l'instant futur à partir duquel le quota de temps imparti à la tâche élue sera épuisé (le quota résultant de la différence entre la plus petite date future de fin au plus part et l'instant présent).

γ) Toutefois, si l'appel au micro-noyau est provoqué par l'horloge 14 dans le cas d'un armement pour quota de temps imparti à la tâche en cours de traitement, alors le micro-noyau exécute d'abord l'action de traitement d'anomalie prévue par l'application, puis les actions α) et β).

Le micro-noyau, à partir de ces deux instants (le plus petit instant futur de réveil d'une tâche et l'instant futur d'épuisement de quota de temps imparti à la tâche élue) arme ensuite l'horloge 14 de telle façon qu'elle soit activée au plus petit de ces deux instants (soit pour réveiller une tâche au bon moment, soit pour détecter une tentative de violation de quota de temps c'est-à-dire une anomalie de fonctionnement). L'horloge 14 étant armée, on sort du micro-noyau éventuellement avec commutation.

Ainsi, pendant l'exécution, le changement de tâche active se fait soit par interruption au temps, soit consécutivement à un changement de noeud pour la tâche active.

L'interruption due au temps peut avoir pour origine soit le fait qu'une tâche en attente devient prête (compte tenu du cadencement par le temps), soit le fait que la tâche active a épuisé son quota de temps imparti, auquel cas un contrôle de sûreté est effectué.

Lorsque la tâche active change de noeud dans son graphe de contrôle, soit sa date de fin au plus tard est reculée, soit sa date de début au plus tôt est reculée. Dans le premier cas, une autre tâche est susceptible de devenir active à sa place. Dans le deuxième cas, la tâche active est mise dans l'ensemble des tâches en attente si sa nouvelle date de début au plus tôt est dans le futur.

Le nombre de préemptions est fini et borné et il est possible de calculer analytiquement une borne maximale du nombre de préemptions.

Par ailleurs, dans la mesure où les quotas de temps sont mis à jour et contrôlés à chaque changement de noeud, il est possible de détecter à temps les anomalies afin de confiner immédiatement la tâche.

Dans la mesure où seuls les déplacements possibles dans le graphe de contrôle sont acceptés, il est impossible qu'une tâche ait un comportement temporel la conduisant à consommer plus de ressources (par exemple de ressource mémoire pour les communications) que ce qui a été statiquement évalué à l'aide du même graphe.

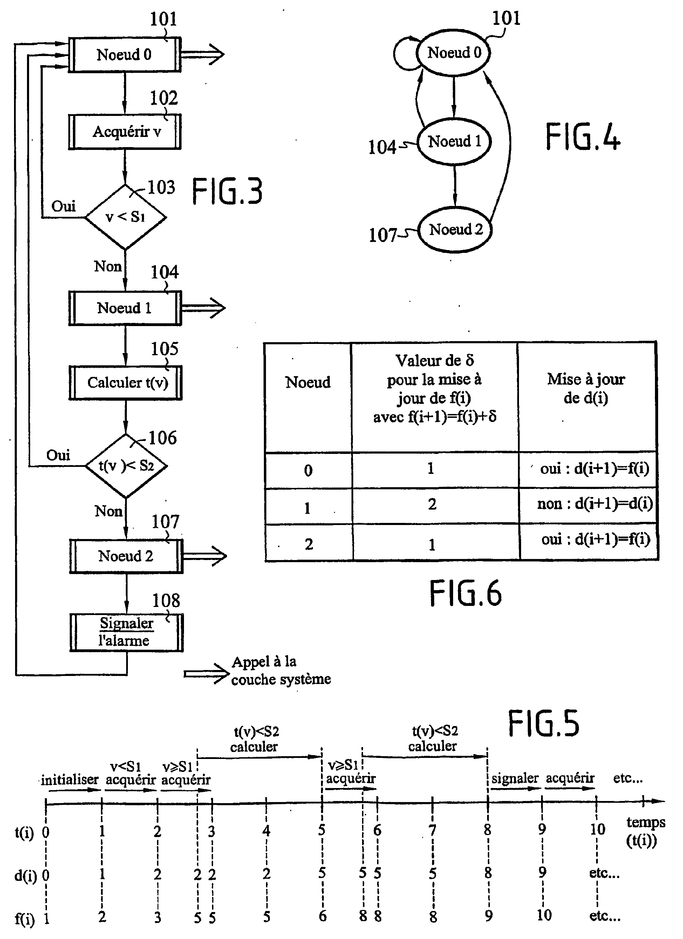

On décrira maintenant en référence aux Figures 3 à 6 un exemple de mise en oeuvre du procédé de sécurisation selon l'invention avec une tâche temps réel particulière.

Selon cet exemple, la fonction de la tâche temps réel est de signaler une alarme si une valeur mesurée est telle que v dépasse un seuil $s_1$ pendant une durée t(v) qui dépasse elle-même un seuil $s_2$.

La Figure 3 représente un organigramme qui illustre le processus de traitement de la tâche correspondant à l'exemple ci-dessus.

La référence 101 désigne un noeud initial ou Noeud 0, au niveau duquel il est fait appel à la couche système.

La référence 102 correspond à une première étape d'acquisition de la valeur mesurée v.

La référence 103 correspond à un test à la suite duquel on retourne au noeud initial 101 puis à l'étape 102, si v < si et par contre on passe au noeud 1 repéré 104 puis à l'étape 105 si $v \geq s_1$.

Au niveau du noeud 104, il est fait appel à la couche système et à l'étape 105 on calcule la durée t(v).

Après l'étape 105, un test 106 permet de retourner au noeud initial 101 si t(v) < $s_2$ et de passer au noeud 2 repéré 107 si t(v) $\geq s_2$.

Après le deuxième noeud 107, où il est fait appel à la couche système, on passe à l'étape 108 de signalement de l'alarme à la suite de quoi on retourne au noeud initial 101.

La Figure 4 représente le graphe de contrôle avec les noeuds 101, 104, 107 et les arcs associés qui correspondent à l'organigramme de la Figure 3.

Dans l'exemple considéré, les délais alloués pour effectuer les opérations "acquérir v" (étape 102), "calculer t (v)" (étape 105) et "signaler l'alarme" (étape 108) sont les suivantes :

| | |
|---|---|
| étape 102 d'acquisition : | 1 unité de temps |
| étape 105 de calcul : | 2 unités de temps supplémentaires |
| étape 108 de signalisation : | 1 unité de temps. |

Pour chacun des noeuds 101, 104, 107, on indique ci-dessous les services rendus par la couche système et les opérations effectuées sur les dates di de début au plus tôt et sur les dates fi de fin au plus tard, sachant que lors de l'initialisation on a une date $d_0$ de début au plus tôt telle que d(0) = 0 et on a une date f(0) de fin au plus tard telle que f(0) = 1 unité de temps.

| Noeud | Services rendus par la couche système | Opérations effectuée sur d(i) et f(i) |
|---|---|---|
| 1/ noeud 0 | i) attendre la fin du délai fixé précédemment<br>ii) ajuster ensuite le nouveau délai | $f(i+1) = f(i) + 1$<br>$d(i+1) = f(i)$ |
| 2/ noeud 1 | ajuster le nouveau délai | $f(i+1) = f(i) + 2$<br>$d(i+1)=d(i)$ |
| 3/ noeud 2 | i) attendre la fin du délai fixé précédemment<br>ii) ajuster ensuite le nouveau délai | $f(i+1) = f(i) + 1$<br>$d(i+1)=f(i)$ |

La Figure 6 présente de façon synthétique une table des noeuds 0, 1 et 2 avec la description des opérations à effectuer sur la date d(i) de début au plus tôt et la date f(i) de fin au plus tard.

Par ailleurs, le graphe de contrôle de la tâche illustré sur la Figure 4 peut être codé sous forme matricielle et se présente alors sous la forme suivante, dans le cas de l'exemple précité :

$$
\begin{array}{c}
\text{Noeud} \quad 0 \quad 1 \quad 2 \\
M = \begin{array}{c} 0 \\ 1 \\ 2 \end{array} \begin{pmatrix} A & A & I \\ A & I & A \\ A & I & I \end{pmatrix}
\end{array}
$$

où

$m_{ij} = A$     si le déplacement du noeud i au noeud j est Autorisé

$m_{ij} = I$     si le déplacement du noeud i au noeud j est Interdit.

La Figure 5 illustre sous forme de chronogramme un exemple de mise en oeuvre de la tâche temps réel décrite ci-dessus en faisant apparaître les valeurs temporelles associées. Les chiffres de 1 à 10 désignent l'heure réelle en nombre d'unités de temps depuis le début du fonctionnement en mode cadencé par le temps.

Le procédé de sécurisation selon l'invention est aussi adapté pour rendre déterministe l'exécution en temps réel d'applications multitâches communiquant par messages entre elles.

Dans ce cas, le procédé comprend les étapes particulières suivantes, qui s'intercalent avec les étapes précédemment décrites dans le cas d'un procédé de base avec applications multitâches sans indication de communication entre tâches :

(n) lors d'une phase de préparation, mémoriser pour chacune des tâches d'une application donnée tous les enchaînements autorisés de ses points de synchronisation temporelle et de communication avec les autres tâches de l'application nécessitant un appel à la couche système, ces enchaînements autorisés se traduisant par un graphe de contrôle de l'exécution d'appels à la couche système de la tâche considérée, chaque graphe comportant un ensemble de noeuds correspondant chacun à un appel à la couche système,

(o) mémoriser chaque zone tampon nécessaire à un échange de données entre tâches, en indiquant sa taille, la taille des éléments qu'elle contient, son emplacement ou adresse de base, ainsi que les relations entre les zones tampons permettant de valider les transferts d'informations nécessaires aux communications,

(p) mémoriser pour chaque zone tampon les valeurs initiales de ses éléments,

(q) initialiser, pour l'application donnée et préalablement au démarrage de l'exécution temps réel selon un mode de fonctionnement cadencé par le temps les valeurs des éléments de la zone tampon avec les valeurs précédemment mises en mémoire,

(r) lors de l'exécution d'une tâche, lors d'un appel à la couche système lorsqu'un noeud du graphe de contrôle de la tâche est atteint et après vérification que, selon le graphe de contrôle de la tâche en cours d'exécution, l'enchaînement à partir du noeud correspondant au précédent appel à la couche système est autorisé, effectuer les mises à jour successives des zones tampons en fonction de la nature de l'appel précédemment mémorisé par les mises à jour incrémentales et nécessaires des paramètres temporels de la tâche en cours d'exécution comprenant la date $d(i)$ de début au plus tôt et la date $f(i)$ de fin au plus tard.

Dans le cas où des premier et deuxième contextes d'exécution sont définis pour chaque tâche de l'application et son prolongement dans la couche système, on a en outre les particularités suivantes :

Au niveau de la couche système, on autorise le partage des seule zones tampons par les prolongements des contextes d'exécution des tâches d'une application, une zone tampon donnée pour les communications dynamiques correspondant à l'envoi de messages ne pouvant être partagée que par deux prolongements de contextes d'exécution d'une tâche, tandis qu'une zone tampon donnée pour les communications statiques correspondant à un flot de données datées peut être partagée par plus de deux prolongements de contextes d'exécution d'une tâche mais ne peut toujours être écrite ou modifiée que par un seul contexte.

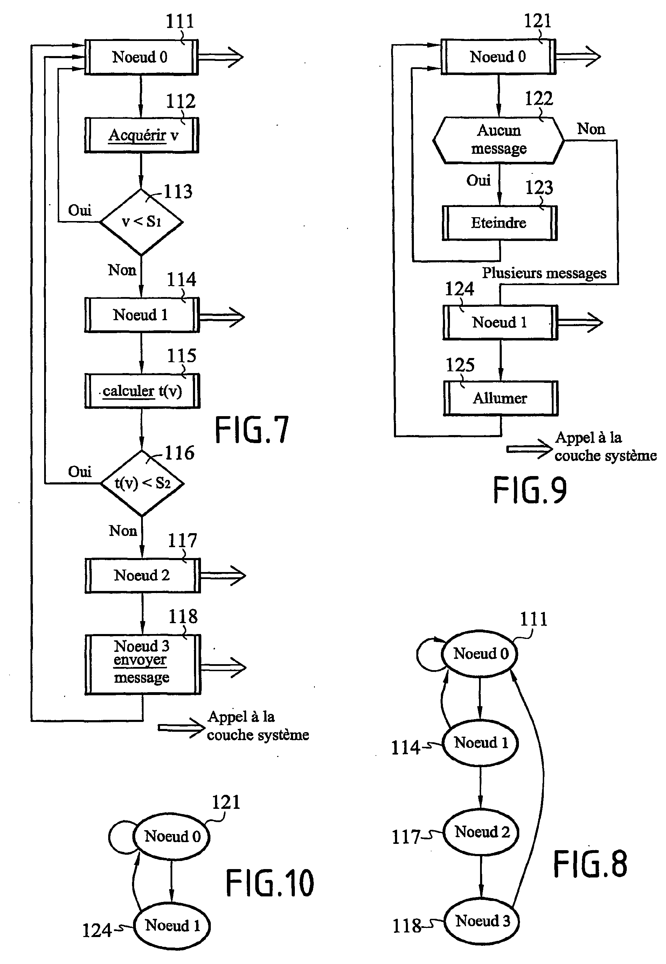

On décrira maintenant en référence aux figures 7 à 13, un exemple d'application du procédé de sécurisation selon l'invention à la mise en oeuvre de deux tâches temps réel communiquant par message.

Dans cet exemple simple, la fonction réalisée consiste à allumer une lampe d'alarme si une valeur mesurée v est telle que v dépasse un seuil $s_1$, et si la durée $t(v)$ de dépassement du seuil $s_1$, par la valeur mesurée v dépasse elle-même un seuil $s_2$.

Une tâche de traitement fait ainsi l'acquisition de v et envoie, si nécessaire, un message à une tâche d'alarme qui allume la lampe indiquée.

La Figure 7 représente l'organigramme correspondant à l'exécution de la tâche de traitement de l'exemple considéré.

La référence 111 désigne le noeud initial ou noeud 0 pour lequel il est fait appel à la couche système.

La première étape 112 est une étape d'acquisition de la valeur mesurée v, à laquelle est associé un test 113 qui compare la valeur v au seuil $s_1$.

Si $v < s_1$, il y a retour au noeud initial 111 tandis que si $v \geq s_1$, on passe au noeud 1 désigné par la référence 114 et qui donne lieu à un appel à la couche système.

La deuxième étape 115, qui fait suite au noeud 114, correspond au calcul de la durée $t(v)$.

Le test 116 associé à l'étape 115 compare la durée $t(v)$ au seuil $s_2$.

Si $t(v) < s_2$, il y a retour au noeud initial 111, tandis que si $t(v) \geq s_2$, on passe au noeud 2 désigné par la référence 117 et qui donne lieu à un appel à la couche système.

Après le noeud 117, on passe au troisième noeud désigné par la référence 118 pour lequel il y a appel à la couche système et réalisation d'une troisième étape consistant à envoyer un message d'alarme, avant de retourner au noeud initial 111.

La Figure 8 représente le graphe de contrôle correspondant à l'organigramme de la Figure 7, avec les noeuds et arcs autorisés.

La Figure 9 représente l'organigramme correspondant à l'exécution de la tâche d'alarme de l'exemple considéré.

La référence 121 désigne le noeud initial ou noeud 0 pour lequel il est fait appel à la couche système.

Un test 122 examine si un message est reçu.

Dans le cas où aucun message n'est présent, il y a passage à une étape 123 d'extinction de la lampe d'alarme et retour au noeud initial 121.

Si un ou plusieurs messages sont présents, il y a passage au premier noeud 124 avec appel à la couche système et passage à une étape 125 d'allumage de la lampe d'alarme avant un retour au noeud initial 121.

La Figure 10 représente le graphe de contrôle correspondant à l'organigramme de la figure 9, avec les noeuds et arcs autorisés.

Dans l'exemple considéré, les délais alloués pour effectuer les opérations "acquérir v", "calculer $t(v)$", "envoyer message", "éteindre", "allumer", respectivement aux étapes 112, 115, 118, 123 et 125 sont les suivants :

"acquérir v" : 1 unité de temps
"calculer $t(v)$" : 2 unités de temps supplémentaires
"envoyer message" : 1 unité de temps, mais le message sera disponible dans 2 unités de temps
"éteindre" : 1 unité de temps
"allumer" : 1 unité de temps.

On indiquera ci-dessous pour chaque noeud de chacune des deux tâches le service rendu pour la couche système, et les opérations effectuées sur les dates $d(i)$ de début au plus tôt et les dates $f(i)$ de fin au plus tard (avec initialement $d(0) = 0$ et $f(0) = 1$) ainsi que sur la date dV de visibilité des messages.

| Noeud (Tâche de traitement) | Service rendu par la couche système | Opérations effectuées sur d(i), f(i) et dV |
|---|---|---|
| Noeud initial III | - attendre la fin du délai fixé précédemment - ajuster ensuite le nouveau délai | $f(i+1) = f(i)+1$ ; $d(i+1) = f(i)$ |
| 1$^{er}$ noeud 114 | - ajuster le nouveau délai | $f(i+1) = f(i)+2$ ; $d(i+1)=d(i)$ |
| 2$^e$ noeud 117 | - attendre la fin du délai fixé précédemment - ajuster ensuite le nouveau délai | $f(i+1) = f(i) + 1$ ; $d(i+1) = f(i)$ |
| 3$^e$ noeud 118 | - copier le message dans la zone d'émission du prolongement du contexte de la tâche dans la couche système | $f(i+1) = f(i)$ ; $d(i+1) = d(i)$ $dV = d(i) + 2$ |
| (Tâche d'alarme) | | |
| Noeud initial 121 | - attendre la fin du délai fixé précédemment - ajuster ensuite le nouveau délai - copier depuis la zone d'émission de la tâche de traitement les messages visibles dans la zone de réception du prolongement du contexte de la tâche dans la couche système | $f(i+1)=f(i)+1$ $d(i+1) = f(i)$ |
| 1$^{er}$ noeud 124 | - marquer, dans la zone de réception du prolongement du contexte de la tâche dans la couche système, que le premier message est consommé. | $f(i+1) = f(i)$ $d(i+1) = d(i)$ |

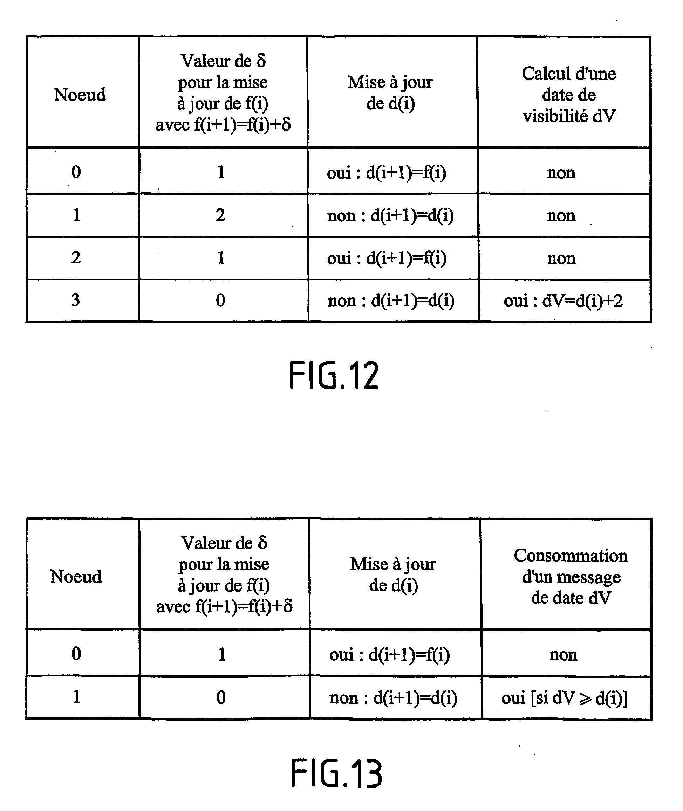

Les Figures 12 et 13 représentent respectivement pour la tâche de traitement et la tâche d'alarme de l'exemple considéré, des tables des noeuds comportant les descriptions des opérations à effectuer sur la date d(i) de début au plus tôt, la date f(i) de fin au plus tard et sur la date dV de visibilité.

Les graphes de contrôle de la tâche de traitement et de la tâche d'alarme peuvent être codés sous forme matricielle de la façon suivante :

$$
\begin{array}{c}
\text{Noeud} \quad \begin{array}{cccc} 0 & 1 & 2 & 3 \end{array} \\
M = \begin{array}{c} 0 \\ 1 \\ 2 \\ 3 \end{array}
\begin{pmatrix}
A & A & I & I \\
A & I & A & I \\
I & I & I & A \\
A & I & I & I
\end{pmatrix}
\end{array}
\quad (2) \quad \text{(tâche de traitement)}
$$

$$
\begin{array}{c}
\text{Noeud} \quad \begin{array}{cc} 0 & 1 \end{array} \\
M = \begin{array}{c} 0 \\ 1 \end{array}
\begin{pmatrix}
A & A \\
A & I
\end{pmatrix}
\end{array}
\quad (3) \quad \text{(tâche d'alarme)}
$$

où $m_{ij}$ = A si le déplacement du noeud i au noeud j est autorisé, et

$m_{ij}$ = I, si le déplacement du noeud i au noeud j est interdit.

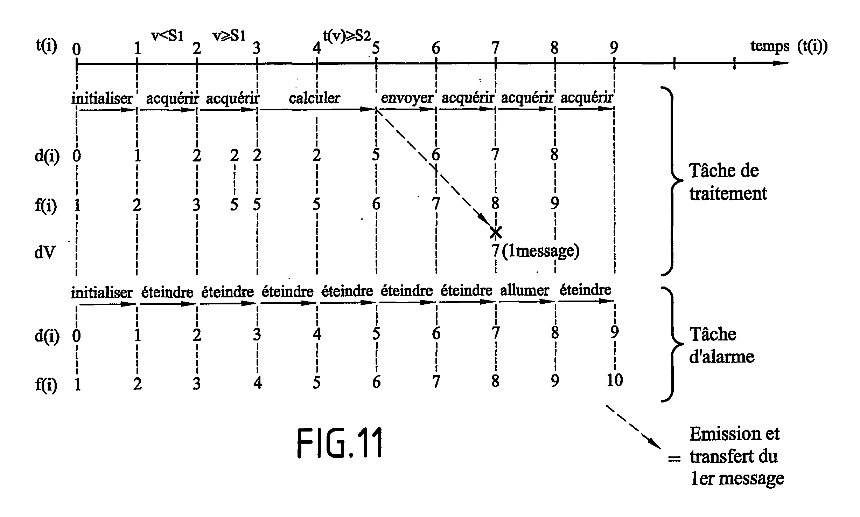

La figure 11 illustre sous forme de chronogramme un exemple de mise en oeuvre des deux tâches communicantes décrites ci-dessus en faisant apparaître les valeurs temporelles associées. Les chiffres de 1 à 10 désignent l'heure réelle en nombre d'unités de temps depuis le début du fonctionnement en mode cadencé par le temps.

Un seul et unique type de message est stocké dans une file de messages donnée. Une date dV de visibilité du message est associée à chaque message envoyé. La date dV précise l'instant futur à partir duquel le destinataire peut consommer le message. Les consommations de messages s'effectuent par ordre de date de visibilité dV, puis par nom d'émetteur et enfin par ordre d'émission, ce qui permet d'ordonner totalement les messages en vue de leur consommation.

Pour chaque file de message, il existe une zone d'émission dans le contexte de chaque émetteur et une zone de réception pour le propriétaire de la file de messages concernée.

Chaque producteur (émetteur) ayant une zone d'émission, il n'existe pas de problèmes de conflit entre deux expéditions de message par deux tâches différentes.

Par ailleurs, comme on l'a déjà indiqué plus haut, la segmentation mémoire permet de limiter l'impact des défaillances d'une tâche à son espace mémoire propre. La propagation d'une défaillance d'une tâche aux autres tâches de l'application est alors impossible.

L'utilisation de la segentation mémoire permet d'autre part d'obtenir la propriété suivante : au sein d'un intervalle de temps du cadencement par le temps (TT) d'une tâche, le contexte d'exécution de cette tâche est invariant entre le début d'une nouvelle instruction et la fin de celle qui le précédait.

La segmentation mémoire est appliquée à la couche système elle-même afin de la cloisonner en interne ainsi que pour cloisonner le micro-noyau du reste de la couche système.

L'unité de protection mémoire 16 constitue le mécanisme matériel qui permet de vérifier que la segmentation mémoire est effectivement mise en oeuvre du point de vue de l'architecture physique.

La Figure 2 représente la répartition en profondeur du code engendré depuis le niveau de l'application avec mode d'exécution utilisateur 201 ou mode non privilégié jusqu'au micro-noyau 203 en passant par la couche système 202, avec mode d'exécution privilégié.

L'accès à la couche système 202 avec un mode d'exécution privilégié est protégé par une instruction de dérivation du type "trap" tandis que le passage de la couche système 202 au micro-noyau 203 est engendré par une instruction du type mouvement.

L'horloge 14 assure le cadencement par le temps et émet un signal d'interruption horloge sh lorsqu'une quantité programmable de temps s'est écoulée.

Sur la Figure 2, on voit donc au niveau applicatif 201 le code et les données des différentes tâches tandis qu'au niveau de la couche système 202 on trouve d'une part les prolongements des contextes des tâches dans la couche système et d'autre part le code de la couche système. Au niveau du micro-noyau 213, on trouve les données et le code du micro-noyau pour la gestion de l'allocation du processeur aux tâches, et la gestion du temps.

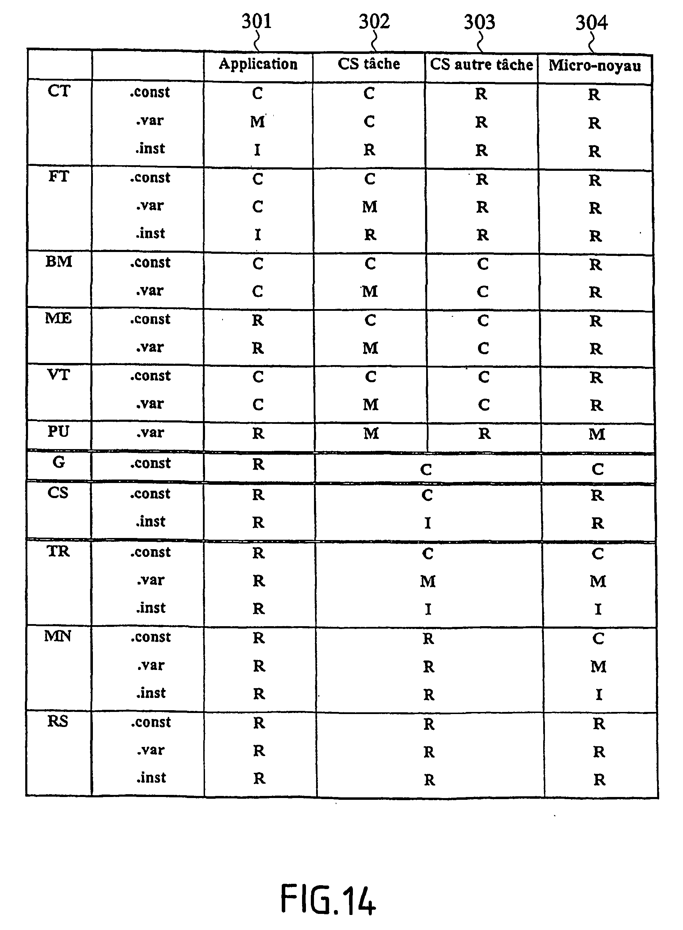

On donnera maintenant en référence à la figure 14 une table détaillée des droits des différents segments dans le cas d'un exemple de mise en oeuvre du procédé de sécurisation selon l'invention avec mémoire segmentée.

Comme on l'a déjà vu, une application multitâche comprend un code spécifique, des tâches, des flots de variables temporelles, des boîtes à messages, une couche système assurant les transferts d'information entre tâches, un exécuteur de graphe contrôlant les déplacements des tâches dans le code applicatif et un micro-noyau assurant la gestion du temps et le partage du processeur.

La mémoire est découpée en segments ayant des droits d'accès dépendant du contexte d'exécution du processeur.

Pour comprendre le tableau de la figure 14, on donne les définitions suivantes :

. inst : ensemble d'instructions consécutives en mémoire ;
. const :ensemble de données consécutives de valeur constante ;
. var : ensemble de données consécutives modifiables par des instructions ;
I : droit d'exécuter les instructions du segment ;
M : droit de modifier et de consulter le segment ;
C : le droit d'accès au segment est limité à la consultation ;
R : l'accès au segment est refusé.

Les segments sont regroupés en zones selon qu'ils sont spécifiques de l'application ou liés au modèle selon l'invention sur le calculateur 10 avec son processeur.

Pour chaque tâche, on a des zones d'application successives CT, FT, BM, ME, VT et PU. La description de ces zones d'application est la suivante :

zone CT de calcul de la tâche :

- const et .var: les données de la tâche, dont la pile en mode non privilégié ;
- inst : les calculs de la tâche

Zone FT de fonctionnement de la tâche :

- const : la description du fonctionnement de la tâche (graphe d'exécution, description des noeuds, échéances, majorants des temps de calcul par l'unité centrale de calcul,...) ;
- var : la zone de passage d'arguments vers la couche système ;
- inst : les fonctions de demande de changement de noeud auprès de la couche système.

Zone BM de boîte à messages :

- const : les caractéristiques de chaque boîte à messages de la tâche y compris les liaisons aux zones d'émission (zones ME) ;
- var : l'ensemble des messages accessibles à l'instant courant par la tâche.

Zone ME de stockage de messages :

- const : la description des zones de stockages des messages émis par la tâche et non visibles des tâches destinataires ;
- var : les zones de stockages elle-même.

Zone VT de variables temporelles :

- const. La description des zones de stockage pour la tâche, des valeurs des flots de variables temporelles visibles par la tâche y compris les liaisons aux zones du producteur des valeurs ;
- var : les zones de stockage pour la tâche des valeurs passées visibles.

Zone PU :

- var : les données temporaires de travail nécessaires au processeur, le contexte courant de la tâche, la pile en mode privilégié.

On a également une zone Globale d'application commune aux tâches, dont la description est la suivante :

Zone G globale :

- const : la description des constantes globales de l'application (nombre de tâches, références des descripteurs de tâches, description des horloges...) et les constantes d'interface avec la couche système.

La couche système comprend elle-même une zone CS dont la description est la suivante :

Zone CS de la couche système :

- const : pour mémoire ;
- var : vide (le passé est stocké dans le segment .var de la zone PU) ;
- inst : les instructions de l'exécuteur de graphe, de la gestion des boîtes à messages, de la mise à disposition des valeurs passées des flots de variables temporelles et les instructions de gestion des horloges et de calcul des échéances.

La description de la zone TR de transfert commune à la couche système est la suivante :

Zone TR de transfert :

- const : pour mémoire ;
- var: l'identification de la tâche active

- inst : les instructions de changement des droits d'accès à la mémoire par le matériel et de branchement dans la couche système ou le micro-noyau.

Le micro-noyau comprend des zones MN et RS dont la description est la suivante :

Zone MN :

- const : pour mémoire ;
- var : les données nécessaires à la gestion du matériel (gestion du temps, gestion des instructions "trap"...) ;
- inst : les instructions de gestion des ensembles de tâches prêtes ou au repos en fonction des échéances, de sauvegarde et de changement du contexte matériel, de gestion de l'interruption horloge pour droit d'utilisation du processeur épuisé et de mise en fonction de la protection mémoire disponible sur le calculateur.

Zone RS :

- const : pour mémoire ;
- var : vide ;
- inst : les instructions d'initialisation du calculateur et du logiciel qui s'exécutent sans protection de la mémoire.

A un instant donné, le processeur exécute des instructions soit pour le compte d'une tâche dans le code applicatif (en mode non privilégié), soit pour une tâche dans la couche système (en mode privilégié), soit dans le micro-noyau.

Le tableau de la Figure 14 présente en ligne les segments d'une tâche, puis ceux de la couche système et enfin ceux du micro-noyau, tels que définis ci-dessus. Les colonnes représentent les droits d'accès à la mémoire selon que le processeur exécute des instructions du code d'application de la tâche (colonne 301), du code de la couche système pour la tâche (colonne 302), du code de la couche système pour une autre tâche (colonne 303), du code pour le micro-noyau après initialisation du calculateur (colonne 304).

En général, la mémoire peut être découpée en pages et une page peut être protégée en écriture ou absente ou disponible. Dans cette situation, la taille des segments sera arrondie à un multiple de la page, .const et .var seront fusionnés et protégés en écriture, et les pages de droits R seront soit absentes, soit ôtées de la description.

## Revendications

**1.** Procédé de sécurisation rendant déterministe l'exécution en temps réel d'applications multitâches du type contrôle-commande dans un système de contrôle comprenant :

- au moins une première horloge (14) qui émet un signal d'interruption (sh) lorsqu'une quantité de temps réglable s'est écoulée,
- une unité centrale de calcul (10) avec au moins un processeur pouvant recevoir au moins ledit signal d'interruption d'horloge (sh),
- une mémoire principale (12, 13), et
- un ensemble de contrôleurs ($1_1$ à $1_N$) de périphérique (1 à N) pour la gestion d'entrées-sorties du système de contrôle,

procédé **caractérisé en ce qu'**il comprend les étapes suivantes :

a) mémoriser, pour chacune des tâches d'une application donnée tous les enchaînements autorisés de ses points de synchronisation temporelle nécessitant un appel à une couche système, ces enchaînements se traduisant par un graphe de contrôle de l'exécution d'appels à la couche système de la tâche considérée, chaque graphe comportant un ensemble de noeuds correspondant chacun à un appel à la couche système du système de contrôle,
b) mémoriser, pour chaque noeud du graphe de contrôle de chaque tâche, la nature de l'appel à la couche système et ses paramètres d'appel, y compris des paramètres temporels qui permettent les mises à jours de dates $d(i)$ de "début au plus tôt" et de dates $f(i)$ de "fin au plus tard",
c) mémoriser, pour chaque tâche, un noeud initial (Noeud 0) dans le graphe associé,
d) initialiser, pour l'application donnée et préalablement au démarrage de l'exécution temps réel selon un mode de fonctionnement cadencé par le temps, pour chaque tâche, le noeud initial (Noeud 0) et l'instant initial représentant l'état initial de la tâche considérée,

e) initialiser, pour l'application donnée et préalablement au démarrage de l'exécution temps réel selon un mode de fonctionnement cadencé par le temps l'ordre de départ de chacune des tâches en effectuant un pré-ordonnancement des listes des tâches au niveau d'un micro-noyau atomique,

f) armer la première horloge (14) pour émettre le signal d'interruption d'horloge (sh) constituant un appel au micro-noyau, au premier instant de l'application pour le démarrage de l'exécution de cette application en mode cadencé par le temps,

g) en cours de fonctionnement normal après armement de la première horloge (14), provoquer le désarmement de la première horloge (14) par le micro-noyau à chaque appel au micro-noyau ; lors d'un appel au micro-noyau par la couche système ou par le traitement du signal d'interruption (sh), faire passer le micro-noyau à l'étape de mise à jour des listes des tâches de façon ordonnée selon les caractéristiques temporelles des tâches, à savoir leur date d(i) de début au plus tôt et leur date f(i) de fin au plus tard ; faire calculer au micro-noyau, après la mise à jour des listes, le plus petit instant futur où une tâche devra être réveillée et faire armer la première horloge (14) par le micro-noyau, à partir de ce plus petit instant futur, pour réveiller ladite tâche et sortir du micro-noyau,

h) lors de l'exécution d'une tâche, effectuer un appel à la couche système seulement lorsqu'un noeud du graphe de contrôle de ladite tâche est atteint, en passant comme argument le numéro du noeud ; procéder à un contrôle, lors de l'entrée dans la couche système, pour vérifier si, selon le graphe de contrôle de la tâche en cours d'exécution, l'enchaînement à partir du noeud correspondant au précédent appel à la couche système est autorisé, afin de lancer au niveau de la couche système le traitement d'une anomalie si ledit enchaînement n'est pas autorisé et de poursuivre l'exécution si ledit enchaînement est autorisé, effectuer la mise à jour des paramètres temporels de la tâche en cours d'exécution comprenant la date d(i) de début au plus tôt et la date f(i) de fin au plus tard à l'aide d'appels au micro-noyau par la couche système et poursuivre normalement l'exécution de la tâche en cours jusqu'à ce que celle-ci atteigne à nouveau un noeud de son graphe de contrôle.

2. Procédé de sécurisation selon la revendication 1, **caractérisé en ce qu'**il est appliqué à un système de contrôle comprenant en outre une unité de protection mémoire (16) pour le contrôle des droits d'accès d'adressage, laquelle unité de protection mémoire (16), à partir d'une adresse demandée (ad) fournie par l'unité centrale de calcul (10) et de droits (C) d'accès des contextes d'exécution du processeur sur l'espace mémoire adressable, produit de manière exclusive une adresse validée (av) qui permet l'accès ou bien émet en direction de l'unité centrale de calcul (10) un signal d'exception (se) d'adressage non autorisé, et **en ce qu'**il comprend en outre les étapes suivantes :

i) lors d'une phase de préparation, mémoriser pour une application donnée, les droits d'accès à chacun des segments mémoire pour le micro-noyau et pour chaque tâche de l'application et son prolongement dans la couche système de manière à constituer des premier et deuxième contextes d'exécution selon que les instructions se trouvent dans le code propre à l'application constituant la tâche ou que ces instructions se trouvent dans le code générique de la couche système constituant le prolongement de la tâche dans la couche système,

j) pour une application donnée et préalablement au démarrage de l'exécution temps réel selon un mode de fonctionnement cadencé par le temps, initialiser le contexte du micro-noyau et les premier et deuxième contextes d'exécution pour chaque tâche et pour son prolongement dans la couche système,

k) lors de l'exécution d'une tâche, effectuer un appel à la couche système à l'aide d'une instruction de passage dans un mode d'exécution privilégié qui permet de passer du contexte d'exécution de la tâche au contexte d'exécution de son prolongement dans la couche système, et après avoir contrôlé que l'enchaînement à partir du noeud correspondant au précédent appel système est autorisé, et après mise à jour des paramètres temporels de la tâche à l'aide d'appels au micro-noyau par la couche système, retourner dans le code de la tâche à l'aide d'une instruction de retour dans le mode non-privilégié qui permet de passer du contexte d'exécution du prolongement dans la couche système au contexte d'exécution de la tâche.

3. Procédé selon la revendication 2, **caractérisé en ce que** les contextes d'exécution de chaque tâche de l'application sont deux à deux disjoints.

4. Procédé selon la revendication 2 ou la revendication 3, **caractérisé en ce que** les prolongements des contextes d'exécution des tâches de l'application dans la couche système ne sont pas accessibles en écriture aux contextes d'exécution des tâches avec le code de l'application.

5. Procédé selon l'une quelconque des revendications 1 à 4, **caractérisé en ce que** le codage du graphe de contrôle d'une tâche interdit toute défaillance de cause commune entre le mécanisme de contrôle d'exécution d'une tâche quelconque de l'application et l'exécution de cette tâche elle-même.

**6.** Procédé selon l'une quelconque des revendications 1 à 5, **caractérisé en ce qu'**il comprend en outre les étapes suivantes :

l) lors d'une phase de préparation, mémoriser pour une application donnée, pour tous les enchaînements autorisés dans chaque tâche, un quota de temps constituant un majorant du temps d'exécution maximum nécessaire pour passer d'un noeud à l'autre dans le graphe de contrôle de la tâche, chacun de ces quotas de temps englobant le temps passé dans l'exécution des instructions propres de la tâche, mais aussi le temps passé dans l'exécution du code générique de la couche système en prolongement de la tâche,

m) en cours de fonctionnement normal après armement de la première horloge (14), lors d'un appel au micro-noyau déclenché par le signal (sh) d'interruption sur le temps et provoquant le désarmement de la première horloge (14), procéder à un contrôle pour vérifier si le signal (sh) d'interruption sur le temps déclenchant l'appel au micro-noyau est lié à une tentative de violation d'un quota de temps, et si c'est le cas faire lancer par le micro-noyau le traitement de l'anomalie tandis que si le signal (sh) d'interruption sur le temps n'est pas lié à une tentative de violation d'un quota de temps, faire passer le micro-noyau à l'étape de mise à jour des listes de tâches et, après cette mise à jour des listes des tâches, faire calculer au micro-noyau d'une part le plus petit instant futur où une tâche devra être réveillée et d'autre part l'instant futur à partir duquel le quota de temps imparti à la tâche en exécution à la sortie du micro-noyau, déterminée lors de la mise à jour des listes, sera épuisé, et faire armer la première horloge (14) par le micro-noyau au plus petit de ces instants futurs pour, selon le cas, soit réveiller la tâche, soit détecter une tentative de violation de quota de temps révélant une anomalie de fonctionnement, et sortir du micro-noyau après armement de la première horloge (14).

**7.** Procédé selon l'une quelconque des revendications 1 à 6, **caractérisé en ce qu'**une deuxième horloge (15) est mise en oeuvre et **en ce que** l'on fait accéder le micro-noyau à cette deuxième horloge (15) pour contrôler, par comparaison des signaux de temps, l'écoulement du temps cadencé par la première horloge (14).

**8.** Procédé de sécurisation selon l'une quelconque des revendications 1 à 7, rendant déterministe l'exécution en temps réel d'applications multitâches communicantes de type contrôle-commande, **caractérisé en ce qu'**il comprend en outre les étapes suivantes :

n) lors d'une phase de préparation, mémoriser pour chacune des tâches d'une application donnée tous les enchaînements autorisés de ses points de synchronisation temporelle et de communication avec les autres tâches de l'application nécessitant un appel à la couche système, ces enchaînements autorisés se traduisant par un graphe de contrôle de l'exécution d'appels à la couche système de la tâche considérée, chaque graphe comportant un ensemble de noeuds correspondant chacun à un appel à la couche système,

o) mémoriser chaque zone tampon nécessaire à un échange de données entre tâches, en indiquant sa taille, la taille des éléments qu'elle contient, son emplacement ou adresse de base, ainsi que les relations entre les zones tampons permettant de valider les transferts d'informations nécessaires aux communications,

p) mémoriser pour chaque zone tampon les valeurs initiales de ses éléments,

q) initialiser, pour l'application donnée et préalablement au démarrage de l'exécution temps réel selon un mode de fonctionnement cadencé par le temps les valeurs des éléments de la zone tampon avec les valeurs précédemment mises en mémoire,

r) lors de l'exécution d'une tâche, lors d'un appel à la couche système lorsqu'un noeud du graphe de contrôle de la tâche est atteint et après vérification que, selon le graphe de contrôle de la tâche en cours d'exécution, l'enchaînement à partir du noeud correspondant au précédent appel à la couche système est autorisé, effectuer des mises à jour successives des zones tampons en fonction de la nature de l'appel précédemment mémorisé et des mises à jour incrémentales et nécessaires des paramètres temporels de la tâche en cours d'exécution comprenant la date d(i) de début au plus tôt et la date f(i) de fin au plus tard.

**9.** Procédé selon les revendications 2 et 8, **caractérisé en ce que**, au niveau de la couche système, on autorise le partage des seule zones tampons par les prolongements des contextes d'exécution des tâches d'une application, une zone tampon donnée pour les communications dynamiques correspondant à l'envoi de messages ne pouvant être partagée que par deux prolongements de contextes d'exécution d'une tâche, tandis qu'une zone tampon donnée pour les communications statiques correspondant à un flot de données datées peut être partagée par plus de deux prolongements de contextes d'exécution d'une tâche mais ne peut toujours être écrite ou modifiée que par un seul contexte.

**10.** Procédé selon l'une quelconque des revendications 1 à 9, **caractérisé en ce qu'**il est appliqué à un système de contrôle-commande d'un niveau de classe de sûreté 1 E pour un réacteur nucléaire.

**Claims**

1.  A security method making real time execution of multitask applications of the control and command type in a control system deterministic, the method comprising:

    - at least a first clock (14) that issues an interrupt signal (sh) whenever an adjustable quantity of time has elapsed;
    - a central processor unit (CPU) (10) having at least one processor capable of receiving at least said clock interrupt signal (sh);
    - a main memory (12, 13); and
    - a set of controllers ($1_1$ to $1_N$) for controlling peripherals (1 to N) for managing inputs/outputs of the control system,

    the method being **characterised in that** it comprises the following steps:

    a) for each of the tasks of a given application, storing all of the chaining that is authorized from each time synchronization point of the task that requires a call to a system layer, said chaining being represented by a control graph for monitoring the execution of system layer calls made by the task in question, each control graph comprising a set of nodes each corresponding to a call to the system layer of the control system;
    b) for each node of the control graph of each task, storing the nature of the call to the system layer and its call parameters, including time parameters enabling "earliest start" times d(i) and "latest finish" times f(i) to be updated;
    c) for each task, storing an initial node (Node 0) in the associated graph;
    d) for the given application and prior to starting real time execution in a time-triggered operating mode, initializing, for each task, the initial node (Node 0) and the initial instant representing the initial state of the task in question;
    e) for the given application and prior to starting real time execution in a time-triggered operating mode, initializing the starting order of each of the tasks by pre-ordering lists of tasks in an atomic micro-kernel;
    f) setting the first clock (14) to issue a clock interrupt signal (sh) constituting a call to the micro-kernel, on the first instant of the application for starting execution of said application in time-triggered mode;
    g) during normal operation after the first clock (14) has been set, causing the first clock (14) to be reset by the micro-kernel on each call to the micro-kernel; during a call to the micro-kernel by the system layer or by processing the interrupt signal (<u>sh</u>), causing the micro-kernel to go to the step of updating the lists of tasks in ordered manner depending on the time characteristics of the tasks, namely their earliest start times d(i) and their latest finish times f(i); and after updating the list, causing the micro-kernel to calculate the nearest future instant on which a task needs to be woken up and causing the first clock (14) to be set by the micro-kernel on the basis of said nearest future instant to wake up said task and leave the micro-kernel; and
    h) while executing a task, making a call to the system layer only when a node of the control graph of said task is reached, and passing as an argument the number of the node; proceeding on entry into the system layer with a check to verify whether, according to the control graph of the task being executed, the chaining from the node corresponding to the preceding system layer call is authorized, in order to launch anomaly processing in the system layer if said chaining is not authorized or to continue with execution if said chaining is authorized, updating the time parameters of the task being executed comprising the earliest start time d(i) and the latest finish time f(i) using calls to the micro-kernel from the system layer, and continuing normal execution of the current task until said task again reaches a node of its control graph.

2.  A security method according to claim 1, **characterised in that** it is applied to a control system further comprising a memory protection unit (16) for controlling addressing access rights, which memory protection unit (16) responds to a requested address (ad) supplied by the CPU (10) and to the rights (C) of the execution context of the processor to access the addressable memory space, by producing in exclusive manner either a validated address (av) giving access, or else issuing an exception signal (se) to the CPU (10) indicative of authorized addressing, and **in that** it further comprises the following steps:

    i) during a preparatory stage, for a given application, storing the access rights to each of the memory segments for the micro-kernel and for each application task and for the extension of each task in the system layer so as to constitute first and second execution contexts depending on whether the instructions are in the code specific to the application constituting the task or the instructions are located in generic code of the system layer constituting the extension of the task in the system layer;
    j) for a given application and prior to starting real time execution in a time-triggered operating mode, initializing the micro-kernel context and the first and second execution contexts for each task and for its extension in the system layer; and

k) during execution of a task, making a call to the system layer using an instruction for passing into a privileged mode of execution which makes it possible to pass from the execution context of the task to the execution context of its extension in the system layer, and after verifying that chaining from the node corresponding to the preceding system call is authorized, and after updating the time parameters of the task using calls to the micro-kernel from the system layer, returning to the code of the task by means of an instruction for returning into the non-privileged mode enabling execution to pass from the execution context of the extension in the system layer to the execution context of the task.

3. A method according to claim 2, **characterised in that** the execution contexts of each application task are disjoint in pairs.

4. A method according to claim 2 or claim 3, **characterised in that** the extensions of the execution contexts of the application tasks into the system layer are not write accessible to the execution contexts of the tasks in the application code.

5. A method according to any one of claims 1 to 4, **characterised in that** the coding of the control graph of a task prevents any failure of common cause occurring both in the mechanism for controlling execution of any task of the application and in the execution of said task itself.

6. A method according to any one of claims 1 to 5, **characterised in that** it further comprises the following steps:

l) during a preparatory stage, for each given application, and for all of the authorized chainings in said task, storing a time quota constituting a supremum for the maximum execution time needed for going from one node to the other in the control graph of the task, each of these time quotas covering both the time passed in executing the instructions specific to the task, and also the time passed in executing the generic code of the system layer in the extension of the task; and

m) during normal operation, after the first clock (14) has been set, in the event of a call to the micro-kernel triggered by the time interrupt signal (sh) and causing the first clock (14) to be reset, checking to verify whether the time interrupt signal (sh) triggering the call to the micro-kernel is associated with an attempt at violating a time quota, and if so, causing the micro-kernel to run anomaly processing, else if the time interrupt signal (sh) is not associated with an attempt to violate a time quota, causing the micro-kernel to update the task lists, and after updating the task lists, to calculate both the nearest future instants at which a task needs to be woken up and the future instants at which the quota of time allocated to the task that will be executing on exiting the micro-kernel will have expired, which time is determined while updating the lists, and causing the micro-kernel to set the first clock (14) to the nearer of said future instants so that either the task is woken up or else an attempt at violating time quota due to anomalous operation is detected, and leaving the micro-kernel after setting the first clock (14).

7. A method according to any one of claims 1 to 6, **characterised in that** a second clock (15) is implemented, and **in that** the micro-kernel is caused to access the second clock (15) to monitor the flows of time as triggered by the first clock (14) by comparing the time signals.

8. A security method according to any one of claims 1 to 7, causing the real time execution of communicating multitask applications of the control and command type to be made deterministic, the method being **characterised in that** it further comprises the following steps:

n) during a preparatory stage, for each of the tasks of a given application storing all of the authorized chainings of its points for time synchronization and for communication with the other tasks of the application requiring a call to the system layer, these authorized chaining being represented by a control graph for the execution of system layer calls made by the task in question, each graph comprising a set of nodes, each corresponding to a call to the system layer;

o) storing each buffer zone needed for exchanging data between tasks, specifying its size, the size of the elements that it contains, its location or base address, and also the relationships between the buffer zones enabling the information transfers needed for communications to be confirmed;

p) storing, for each buffer zone, the initial values of its elements;

q) for the given application and prior to starting real time execution in a time-triggering operating mode, initializing the values of the elements of the buffer zone with values previously stored in memory; and

r) during execution of a task, while making a system layer call when a node of the task control graph is reached and after verifying that according to the control graph of the task currently being executed the chaining from the node corresponding to the preceding system layer call is authorized, causing buffer zones to be updated in succession as a function of the nature of the previously-stored call and performing incremental updates as necessary of the time parameters of the task being executed, comprising its earliest start time d(i) and its latest finish time f(i).

9. A method according to claims 2 and 8, **characterised in that** in the system layer, only the buffer zones are allowed to be shared by the extensions of the execution contexts of the tasks of an application, a given buffer zone for dynamic communications corresponding to sending messages being sharable only by two task execution context extensions, while a given buffer zone for static communications corresponding to a stream of time-stamped data can be shared by more than two task execution context extensions, but can be written to or modified by a single context only.

10. A method according to any one of clams 1 to 9, **characterised in that** it is applied to a control and command system having a safety class level 1E, for a nuclear reactor.

**Patentansprüche**

1. Sicherungsverfahren, das die Echtzeitdurchführung von Multitasking-Anwendungen des Steuer- und Befehlstyps in einem Kontrollsystem deterministisch macht, umfassend:

- mindestens eine erste Zeitschaltung (14), die ein Unterbrechungssignal (sh) entsendet, wenn eine einstellbare Zeitmenge abgelaufen ist,
- eine zentrale Recheneinheit (10) mit mindestens einem Prozessor, der zumindest das Unterbrechungssignal (sh) der Zeitschaltung empfangen kann,
- einen Hauptspeicher (12, 13), und
- eine Gesamtheit von Kontrollelementen ($1_1$ bis $1_N$) an der Peripherie (1 bis N) für die Eingangs-Ausgangs-Steuerung des Kontrollsystems,

wobei das Verfahren **dadurch gekennzeichnet ist, daß** es die folgenden Schritte umfaßt:

a) für jede der Aufgaben einer gegebenen Anwendung Speicherung aller gestatteten Verkettungen ihrer zeitlichen Synchronisationspunkte, die einen Anruf an eine Systemschicht erfordern, wobei sich diese Verkettungen in einem Kontrollgraphen der Ausführung von Anrufen an die Systemschicht der betreffenden Aufgabe zeigen, wobei jeder Graph eine Gesamtheit von Knoten umfaßt, die jeweils einem Anruf an die Systemschicht des Kontrollsystems entsprechen,
b) für jeden Knoten des Kontrollgraphen jeder Aufgabe Speicherung der Art des Anrufes an die Systemschicht und seiner Anrufparameter, inklusive der Zeitparameter, die die Aktualisierungen von Daten d(i) von "frühester Beginn" und von Daten f(i) von "spätestes Ende" ermöglichen,
c) für jede Aufgabe Speicherung eines Anfangsknotens (Knoten 0) in dem zugehörigen Graphen,
d) für die gegebene Anwendung und vor dem Start der Echtzeitdurchführung nach einer zeitlich gestaffelten Funktionsart für jede Aufgabe Initialisierung des Anfangsknotens (Knoten 0) und des Anfangszeitpunktes, der den Anfangszustand der betreffenden Aufgabe darstellt,
e) für die gegebene Anwendung und vor dem Start der Echtzeitdurchführung nach einer zeitlich gestaffelten Funktionsart Initialisierung der Startreihenfolge jeder der Aufgaben, wobei eine Vorerstellung der Listen der Aufgaben im Bereich eines atomischen Mikrokerns durchgeführt wird,
f) Aktivierung der ersten Zeitschaltung (14), um das Zeitunterbrechungssignal (sh) zu entsenden, das einen Anruf an den Mikrokern darstellt, zum ersten Zeitpunkt der Anwendung für den Start der Ausführung dieser Anwendung im zeitlich gestaffelten Modus,
g) während des Normalbetriebs nach Aktivierung der ersten Zeitschaltung (14) Deaktivierung der ersten Zeitschaltung (14) durch den Mikrokern bei jedem Anruf an den Mikrokern; bei einem Anruf an den Mikrokern durch die Systemschicht oder durch die Bearbeitung eines Unterbrechungssignals (sh) Überführen des Mikrokerns in den Schritt der Aktualisierung der Listen der Aufgaben auf geordnete Weise nach den Zeitmerkmalen der Aufgaben, nämlich ihrem Datum d(i) des frühesten Anfangs und ihrem Datum f(i) des spätesten Endes; Berechnenlassen durch den Mikrokern nach der Aktualisierung der Listen des kleinsten zukünftigen Zeitpunkts, zu dem eine Aufgabe wieder aktiviert wird, und Aktivieren der ersten Zeitschaltung (14) durch den Mikrokern ausgehend von diesem kleinsten zukünftigen Zeitpunkt, um die Aufgabe zu aktivieren und aus dem Mikrokern zu holen,

h) bei der Ausführung einer Aufgabe Durchführung eines Anrufs an die Systemschicht nur, wenn ein Knoten des Kontrollgraphen der Aufgabe erreicht ist, wobei als Argument die Nummer des Knotens eingegeben wird; Durchführen einer Kontrolle beim Eintritt in die Systemschicht, um zu überprüfen, ob gemäß dem Kontrollgraphen der in Ausführung befindlichen Aufgabe die Verkettung ab dem dem vorherigen Anruf an die Systemschicht entsprechenden Knoten gestattet ist, um im Bereich der Systemschicht die Bearbeitung einer Anomalie auszulösen, wenn diese Verkettung nicht gestattet ist, und die Aktualisierung der Zeitparameter der in Ausführung befindlichen Aufgabe durchzuführen, umfassend das Datum d(i) des frühesten Anfangs und das Datum f(i) des spätesten Endes, mit Hilfe von Anrufen an den Mikrokern durch die Systemschicht und Verfolgen der normalen Ausführung der laufenden Aufgabe bis diese einen neuen Knoten ihres Kontrollgraphen erreicht.

2. Sicherungsverfahren nach Anspruch 1, **dadurch gekennzeichnet, daß** es für ein Kontrollsystem angewandt wird, das ferner eine Speicherschutzeinheit (16) für die Kontrolle der Adressierungszugriffsrechte umfaßt, wobei diese Speicherschutzeinheit (16) ausgehend von einer angeforderten Adresse (ad), die von der zentralen Recheneinheit (10) geliefert wird, und von Zugriffsrechten (C) der Ausführungskontexte des Prozessors auf dem adressierbaren Speicherplatz auf exklusive Weise eine validierte Adresse (av) erzeugt, die den Zugriff ermöglicht oder auch in Richtung der zentralen Recheneinheit (10) ein Ausnahmesignal (se) einer nicht gestatteten Adressierung entsendet, und daß es ferner die folgenden Schritte umfaßt:

i) während einer Vorbereitungsphase für eine gegebene Anwendung Speicherung der Zugriffsrechte auf jedes der Speichersegmente für den Mikrokern, sowie für jede Aufgabe der Anwendung und ihre Verlängerung in der Systemschicht, um erste und zweite Ausführungskontexte zu bilden, je nachdem, ob sich die Instruktionen in dem der die Aufgabe darstellenden Anwendung eigenen Code befinden oder ob sich die Instruktionen in dem generischen Code der Systemschicht befinden, der die Verlängerung der Aufgabe in der Systemschicht darstellt,

j) für eine gegebene Anwendung und vor dem Start der Echtzeitdurchführung nach einem zeitlich gestaffelten Funktionsmodus Initialisierung des Kontextes des Mikrokerns und der ersten und zweiten Ausführungskontexte für jede Aufgabe und für ihre Verlängerung in der Systemschicht,

k) bei der Ausführung einer Aufgabe Durchführen eines Anrufes an die Systemschicht mit Hilfe einer Durchgangsinstruktion in einem bevorzugten Ausführungsmodus, der es ermöglicht, vom Ausführungskontext der Aufgabe zum Ausführungskontext ihrer Verlängerung in der Systemschicht überzugehen, und nach der Kontrolle, ob die Verkettung ausgehend von dem Knoten, der dem vorherigen Systemanruf entspricht, gestattet ist, und nach Aktualisierung der Zeitparameter der Aufgabe mit Hilfe von Anrufen an den Mikrokern durch die Systemschicht Rückkehr in den Code der Aufgabe mit Hilfe einer Rückkehrinstruktion in den nicht bevorzugten Modus, der es ermöglicht, vom Ausführungskontext der Verlängerung in der Systemschicht in den Ausführungskontext der Aufgabe überzugehen.

3. Verfahren nach Anspruch 2, **dadurch gekennzeichnet, daß** die Ausführungskontexte jeder Aufgabe der Anwendung paarweise getrennt sind.

4. Verfahren nach Anspruch 2 oder Anspruch 3, **dadurch gekennzeichnet, daß** die Verlängerungen der Ausführungskontexte der Aufgaben der Anwendung in der Systemschicht im Schreibmodus für die Ausführungskontexte der Aufgaben mit dem Code der Anwendung nicht zugänglich sind.

5. Verfahren nach einem der Ansprüche 1 bis 4, **dadurch gekennzeichnet, daß** die Codierung des Kontrollgraphen einer Aufgabe jeden Ausfall aus gemeinsamer Ursache zwischen dem Ausführungskontrollmechanismus einer beliebigen Aufgabe der Anwendung und der Ausführung dieser Aufgabe selbst untersagt.

6. Verfahren nach einem der Ansprüche 1 bis 5, **dadurch gekennzeichnet, daß** sie ferner die folgenden Schritte umfaßt:

l) während einer Vorbereitungsphase für eine gegebene Anwendung, für alle gestatteten Verkettungen in jeder Aufgabe Speicherung einer Zeitquote, die eine Erhöhung der maximal erforderlichen Ausführungszeit für den Übergang von einem Knoten zum anderen im Kontrollgraphen der Aufgabe darstellt, wobei jede dieser Zeitquoten die vergangene Zeit bei der Ausführung der der Aufgabe eigenen Instruktionen, aber auch die vergangene Zeit bei der Ausführung des generischen Codes der Systemschicht in Verlängerung der Aufgabe umfaßt,

m) während der Normalfunktion nach Aktivierung der ersten Zeitschaltung (14) bei einem Anruf an den Mikrokern, der durch das Unterbrechungssignal (sh) für die Zeit ausgelöst wurde und zur Deaktivierung der ersten Zeitschaltung (14) führt, Vornehmen einer Kontrolle, um zu überprüfen, ob das Zeitunterbrechungssignal (sh), das den Anruf an den Mikrokern auslöst, mit einem Versuch der Verletzung einer Zeitquote verbunden ist, und, wenn dies der Fall ist, Auslösen der Bearbeitung der Anomalie durch den Mikrokern, während, wenn das Zeitunterbrechungssignal (sh) nicht mit einem Versuch einer Verletzung einer Zeitquote verbunden ist, Überführen des Mikrokerns in den Schritt der Aktualisierung der Aufgabenlisten und nach dieser Aktualisierung der Aufgabenlisten Berechnung durch den Mikrokern einerseits des kleinsten zukünftigen Zeitpunktes, zu dem eine Aufgabe aktiviert werden soll, und andererseits des zukünftigen Zeitpunktes, ab dem die Zeitquote, die der Aufgabe bei der Ausführung am Ausgang des Mikrokerns zugeteilt wurde, die bei der Aktualisierung der Listen bestimmt wurde, abgelaufen ist, und Aktivierung der ersten Zeitschaltung (14) durch den Mikrokern zum kleinsten dieser zukünftigen Zeitpunkte, um je nach Fall entweder die Aufgabe zu aktivieren oder einen Versuch der Verletzung einer Zeitquote, der eine Funktionsanomalie aufzeigt, zu erfassen und aus dem Mikrokern nach Aktivierung der ersten Zeitschaltung (14) auszugeben.

7. Verfahren nach einem der Ansprüche 1 bis 6, **dadurch gekennzeichnet, daß** eine zweite Zeitschaltung (15) eingesetzt wird und daß der Mikrokern Zugriff auf diese zweite Zeitschaltung (15) erhält, um durch Vergleich der Zeitsignale den Ablauf der gestaffelten Zeit durch die erste Zeitschaltung (14) zu kontrollieren.

8. Sicherungsverfahren nach einem der Ansprüche 1 bis 7, das die Echtzeitdurchführung von Multitasking-Kommunikationsanwendungen vom Typ Kontrolle-Steuerung deterministisch macht, **dadurch gekennzeichnet, daß** es ferner die folgenden Schritte umfaßt:

n) in einer Vorbereitungsphase für jede der Aufgaben einer gegebenen Anwendung Speicherung aller gestatteten Verkettungen der zeitlichen Synchronisations- und Kommunikationspunkte mit den anderen Aufgaben der Anwendung, die einen Anruf an die Systemschicht erfordern, wobei sich diese gestatteten Verkettungen in einem Kontrollgraphen der Ausführung von Anrufen an die Systemschicht der betreffenden Aufgabe zeigen, wobei jeder Graph eine Gesamtheit von Knoten umfaßt, die jeweils einem Anruf an die Systemschicht entsprechen,
o) für jede Pufferzone, die für einen Datenaustausch zwischen den Aufgaben notwendig ist, Speicherung ihrer Anordnung oder Basisadresse unter Angabe ihrer Größe, der Größe der Elemente, die sie enthält, sowie der Verbindungen zwischen den Pufferzonen, die es ermöglichen, die für die Kommunikationen erforderlichen Informationsübertragungen zu validieren,
p) für jede Pufferzone Speicherung der Anfangswerte ihrer Elemente,
q) für die gegebene Anwendung und vor dem Start der Echtzeitdurchführung nach einer zeitlich gestaffelten Funktionsart Initialisierung der Werte der Elemente der Pufferzone mit den vorher gespeicherten Werten,
r) bei der Ausführung einer Aufgabe bei einem Anruf an die Systemschicht, wenn ein Knoten des Kontrollgraphen der Aufgabe erreicht ist, und nach Überprüfung, ob gemäß dem Kontrollgraphen der in Ausführung befindlichen Aufgabe die Verkettung ausgehend von dem Knoten, der dem vorhergehenden Anruf an die Systemschicht entspricht, gestattet ist, Durchführung von aufeinander folgenden Aktualisierungen der Pufferzonen in Abhängigkeit von der Art des vorher gespeicherten Anrufs und den notwendigen Inkrementalaktualisierungen der Zeitparameter der in Ausführung befindlichen Aufgabe, umfassend das Datum d(i) des frühesten Beginns und das Datum f(i) des spätesten Endes.

9. Verfahren nach den Ansprüchen 2 und 8, **dadurch gekennzeichnet, daß** im Bereich der Systemschicht die Teilung der alleinigen Pufferzonen durch die Verlängerungen der Durchführungskontexte der Aufgaben einer Anwendung gestattet ist, wobei eine gegebene Pufferzone für die dynamischen Kommunikationen dem Entsenden von Meldungen entspricht, die nur durch zwei Verlängerungen von Durchführungskontexten einer Aufgabe geteilt werden können, während eine gegebene Pufferzone für die statischen Kommunikationen, die einem datierten Datenfluß entsprechen, durch mehr als zwei Verlängerungen von Durchführungskontexten einer Aufgabe geteilt werden kann, aber immer nur durch einen einzigen Kontext geschrieben oder verändert werden kann.

10. Verfahren nach einem der Ansprüche 1 bis 9, **dadurch gekennzeichnet, daß** es für ein Kontroll-Steuerungs-System eines Sicherheitsklassenniveaus 1 E für einen Kernreaktor angewandt wird.

(sh) 22

données
21

10

(se) 25 23
(ad)
16 (av) 24

26
droits

15

14

1N

1I

13

(A)
(B)
(C) 12

FIG.1

| Mode d'exécution utilisateur 201 | Code et données d'une tâche | ... | Code et données d'une tâche |
|---|---|---|---|
| Dérivation trap | | | |
| Mode d'exécution privilégié 202 | Prolongement du contexte d'une tâche dans la couche système | . | Prolongement du contexte d'une tâche dans la couche système |
| Mouvement move sr | Code de la couche système | | |
| 203 | Données et code du micro-noyau (Gestion de l'allocation du processeur aux tâches, et du temps) | | |
| IT horloge sh | | | |

FIG.2

FIG.3

FIG.4

FIG.6

| Noeud | Valeur de δ pour la mise à jour de f(i) avec f(i+1)=f(i)+δ | Mise à jour de d(i) |
|---|---|---|
| 0 | 1 | oui : d(i+1)=f(i) |
| 1 | 2 | non : d(i+1)=d(i) |
| 2 | 1 | oui : d(i+1)=f(i) |

FIG.5

FIG.7

FIG.9

FIG.8

FIG.10

FIG.11

EP 1 337 919 B1

| Noeud | Valeur de $\delta$ pour la mise à jour de f(i) avec f(i+1)=f(i)+$\delta$ | Mise à jour de d(i) | Calcul d'une date de visibilité dV |
|---|---|---|---|
| 0 | 1 | oui : d(i+1)=f(i) | non |
| 1 | 2 | non : d(i+1)=d(i) | non |
| 2 | 1 | oui : d(i+1)=f(i) | non |
| 3 | 0 | non : d(i+1)=d(i) | oui : dV=d(i)+2 |

# FIG.12

| Noeud | Valeur de $\delta$ pour la mise à jour de f(i) avec f(i+1)=f(i)+$\delta$ | Mise à jour de d(i) | Consommation d'un message de date dV |
|---|---|---|---|
| 0 | 1 | oui : d(i+1)=f(i) | non |
| 1 | 0 | non : d(i+1)=d(i) | oui [si dV $\geqslant$ d(i)] |

# FIG.13

| | | 301 Application | 302 CS tâche | 303 CS autre tâche | 304 Micro-noyau |
|---|---|---|---|---|---|
| CT | .const | C | C | R | R |
| | .var | M | C | R | R |
| | .inst | I | R | R | R |
| FT | .const | C | C | R | R |
| | .var | C | M | R | R |
| | .inst | I | R | R | R |
| BM | .const | C | C | C | R |
| | .var | C | M | C | R |
| ME | .const | R | C | C | R |
| | .var | R | M | C | R |
| VT | .const | C | C | C | R |
| | .var | C | M | C | R |
| PU | .var | R | M | R | M |
| G | .const | R | C | | C |
| CS | .const | R | C | | R |
| | .inst | R | I | | R |
| TR | .const | R | C | | C |
| | .var | R | M | | M |
| | .inst | R | I | | I |
| MN | .const | R | R | | C |
| | .var | R | R | | M |
| | .inst | R | R | | I |
| RS | .const | R | R | | R |
| | .var | R | R | | R |
| | .inst | R | R | | R |

FIG.14